(19) Europäisches Patentamt
European Patent Office
Office européen des brevets

(11) Publication number : **0 306 922 B1**

(12) # EUROPEAN PATENT SPECIFICATION

(45) Date of publication of patent specification : **25.01.95 Bulletin 95/04**

(51) Int. Cl.$^6$ : **G05B 13/04**

(21) Application number : **88114617.9**

(22) Date of filing : **07.09.88**

(54) **Control system for controlling revolution speed of electric motor.**

(30) Priority : **08.09.87 JP 224500/87**
**10.09.87 JP 227035/87**
**19.10.87 JP 263167/87**
**19.10.87 JP 263168/87**
**11.03.88 JP 58000/88**
**24.06.88 JP 83724/88**

(43) Date of publication of application : **15.03.89 Bulletin 89/11**

(45) Publication of the grant of the patent : **25.01.95 Bulletin 95/04**

(84) Designated Contracting States : **DE FR GB**

(56) References cited :
**EP-A- 196 417**
**EP-A- 0 121 792**
**EP-A- 0 175 154**
**JP-A-60 160 404**
**CONFERENCE RECORD OF THE 1986 IEEE INDUSTRY APPLICATIONS SOCIETY ANNUAL MEETING 1986, DENVER, US, pp. 80-85 ; R.D. LORENZ et al. : "SYNTHESIS OF A STATE VARIABLE MOTION CONTROLLER FOR HIGH PERFORMANCE FIELD ORIENTED INDUCTION MACHINE DRIVES"**

(73) Proprietor : **Kabushiki Kaisha Meidensha**
**1-17, Ohsaki 2-chome**
**Shinagawa-ku Tokyo 141 (JP)**

(72) Inventor : **Nomura, Masakatsu**
**19-2, Ueki**
**Kamakura-shi Kanagawa-ken (JP)**
Inventor : **Ashikaga, Tadashi**
**34-6, Minamisenzoku 1-chome**
**Ohta-ku**
**Tokyo (JP)**
Inventor : **Hori, Michitaka**
**5-10, Ohsaki 2-chome**
**Shinagawa-ku**
**Tokyo (JP)**
Inventor : **Mizuno, Takayuki**
**5, Oshibana**
**Nishihiwajima-cho**
**Nishikasugai-gun Aichi-ken (JP)**
Inventor : **Ichioka, Tadashi**
**1955, Mitsui**
**Tanyo-cho**
**Ichinomiya-shi Aichi-ken (JP)**

(74) Representative : **Dipl.-Phys.Dr. Manitz**
**Dipl.-Ing. Finsterwald Dipl.-Ing. Grämkow**
**Dipl.Chem.Dr. Heyn Dipl.Phys. Rotermund**
**Morgan, B.Sc.(Phys.)**
**Postfach 22 16 11**
**D-80506 München (DE)**

**EP 0 306 922 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

### Field of the Invention

The present invention relates generally to a control system for controlling revolution speed of an electric motor, such as an induction motor. More specifically, the invention relates to a motor speed control system with an improved precision in speed control by compensating error factors which may otherwise cause error is motor speed control.

### Description of the Background Art

The EP-A-0 196 417 describes a controller for multidegree of freedom nonlinear mechanical system which carries out adaptive model following control for a nonlinear mechanical system with multiple degrees of freedom that can be described by a q-th degree differential equation and with driving sources for each of its degree of freedom. The controller is equipped with a model section that has a built-in reference model with predetermined response characteristics, a first subtractor for obtaining the difference in the internal states between the mechanical system and the reference model, detectors for detecting signals for the position and its i-th derivative ($1 \leqq i \leqq q$) of the mechanical system, and an adaptor for determing the time-varying parameters of the mechanical system, in accordance with the difference in the internal states between the mechanical system and the reference model obtained from said subtractor, the input applied to the control system, the signals for the position and its i-th derivative ($1 \leqq i \leqq q$) of the mechanical system, and the nonlinear structure of the mechanical system. Furthermore the controller comprises computing means for computing a compensating input to cancel the nonlinear forces in the mechanical system and the interferential forces between the degrees of freedom of the mechanical system, in accordance with the determined parameter signals obtained from the adaptor, the signals for the position and its i-th derivative ($1 \leqq i \leqq q$) of the mechanical system, and the nonlinear structure of the mechanical system, and a second subtractor and a first adder for additively synthesizing the compensating input, for bringing the output of the mechanical system to coincide with the output of the reference model in the course of the time, and the input that ist applied to the control system.

As is well known, variable speed electric motors have been applied in various facilities, such as an elevator car drive system and so forth. In case that the electric motor, such as an induction motor is employed for an elevator car drive system, revolution speed of the electric motor has to be controlled according to a preset known schedule including acceleration stage and deceleration stage. In order to control the revolution speed of the electric motor, various control systems have been employed. The control system typically comprises an electric power converter and inverter for driving the electric motor at a controlled speed. The converter typically comprises a direct current (DC) rectifier for rectifying three-phase alternating current (AC) power and for supplying the rectified DC power to the inverter. The inverter comprises a plurality of pair of series-connected switching element to generate an adjustable frequency output. In many applications, such as frequency adjustment is effected through a control circuit which employs a pulse width modulated (PWM) control technologies for-producing variable frequency gate output to periodically switch the motor at a various speed. In the practical control, the electric motor is driven in motoring mode in the acceleration stage of the elevator car driving schedule for increasing the motor speed, and in braking mode in the deceleration stage of the elevator car driving schedule for decreasing the motor speed.

For adjusting the inverter output frequency and amplitude, various control technologies have been employed, such as proportional/integral (PI) control, vector control and so forth. In general, the motor speed control has been performed employing FEEDBACK or CLOSED LOOP control technologies for adjusting the motor revolution speed to a desired speed which is determined according to the preset motor drive schedule. For this, the actual revolution speed of the electric motor is monitored and compared with the desired speed to produce a speed error signal. Based on this speed error signal, PI control is performed for reducing the error to zero. For performing motor speed control employing the PI control technologies, a PI control circuit is provided. The PI control circuit has a transfer function Gc(S) which can be illustrated by the following equation:

$$Gc(S) = Kp + Ki/S$$

where Kp and Ki are control constants.

The PI control circuit receives the actual motor speed data Wc as FEEDBACK data and compares the same with the desired speed data Ws in order to derive a torque control signal Itc. The torque control signal Itc is applied to the electric motor for adjusting the revolution speed for decreasing the error between the actual motor speed Wc and the desired speed Ws toward zero (0).

In such PI control technologies, the response characteristics is determined by the control constants Kp and Ki. Generally, these control constants Kp and Ki are set in consideration of the inertia moment of the load on the electric motor. Conventionally, the control constants Kp and Ki are set as fixed values. In case of the elevator car speed control, the load of the electric motor varies significantly varies depending upon the passengers in the elevator car. Since variation magnitude of the load on the electric motor is substantial, a difficulty has been encountered to obtain optimal response characteristics at any load condition.

## SUMMARY OF THE INVENTION

Therefore, it is an object of the present invention to provide a control system for controlling revolution speed of an electric motor with improved response characteristics.

In order to accomplish the aforementioned and other objects, the present invention takes one approach to establish dummy load models having characteristics equivalent to an electric motor to be controlled. One of the dummy load model is established for feedback controlling the electric motor on the basis of the speed of the dummy model. The dummy model is divided into first and second models. The first model is designed to have equivalent characteristics to output a first motor speed representative data. The current to supply to the first model is so adjusted as to reduce a difference between the motor speed representative data and a desired motor speed data to zero. A frequency signal is added to the current applied to the first model and supplied to the electric motor to drive the latter. The second model receives the frequency signal to output a frequency signal dependent second motor speed representative value. Sum of the first and second motor speed representative value is compared with a measured motor speed indicative value to derive a speed difference compensation value based on the error therebetween. Based on the speed difference between the sum value and the measured motor speed and the frequency signal, inertia condition on the motor is assumed for controlling transfer characteristics so that the inertia condition in the first model becomes coincident with that of the motor.

According to one aspect of the invention, a motor speed control system comprises:

first means for generating a basic torque current for driving an electric motor at a revolution speed corresponding the magnitude of the torque current;

second means for producing a motor speed indicative signal representative of a revolution speed of the electric motor;

third means for generating a known frequency of a frequency signal which is to be added to the basic torque current for driving the electric motor with a modified torque current;

fourth means, provided equivalent characteristics to that of the electric motor and connected to the first means for receiving the torque current, for generating a first reference speed indicative signal representative of a revolution speed of the electric motor corresponding to the input torque current;

fifth means, provided equivalent characteristics to that of the electric motor and connected to the third means for receiving the frequency signal, for generating a second reference speed indicative signal representative of a revolution speed of the electric motor corresponding to the input frequency signal;

sixth means, receiving the first reference signal, for deriving a difference between the first reference signal value and a desired motor speed representative value for controlling the first means for reducing the difference between the first reference signal value and the desired motor speed representative value to zero;

seventh means receiving the motor speed indicative signal, the first reference speed indicative signal and the second reference speed indicative signal, for deriving a difference between the motor speed indicative signal value and a sum value of the first and second reference speed indicative signal values to produce a speed error signal;

eighth means, responsive to the speed error signal, for deriving a compensation signal based on the speed error signal value for modifying the torque current for compensating the speed error between the motor speed indicative signal value and the sum value; and

ninth means, receiving the speed error signal and the frequency signal, for deriving an inertia representative data representative of an assumed inertia moment on the electric motor, and correcting a transfer characteristics of at least one of circuit components in such a manner that the inertia dependent factor in the fourth means becomes coincidence with that of the electric motor.

In the preferred embodiment, the ninth means further modifies transfer characteristics of at least one of circuit component for maintaining transfer function of overall motor speed controlling loop constant. Alternatively, the third means may be so designed as to produce the frequency signal which has a signal value variation characteristics frequency signal which has a signal value variation characteristics to have an average value zero, or in the alternative to have an integrated value becomes zero.

Further preferably, the fourth and fifth means have first and second transfer elements which are variable of transfer characteristics, the first and second transfer elements of fourth and fifth means being adjusted the transfer characteristics so as to reduce the speed error signal value to zero on the basis of the inertia representative data of the ninth means. The sixth means includes a third transfer element which is variable of transfer characteristics depending on the inertia representative data, the transfer characteristics of the transfer element being adjusted so as to maintain transfer function of overall speed control loop constant.

In the alternative, the motor speed control system may further comprises a transfer element variable of transfer characteristics depending upon the inertia representative data for adjusting the modified torque current to be supplied to the electric motor so as to compensate difference of inertia factors in the electric motor and the fourth means.

According to another aspect of the invention, a motor speed control system comprises:

first means for generating a torque current to drive an electric motor at a revolution speed corresponding the magnitude of the torque current;

second means for producing a motor speed indicative signal representing a revolution speed of the electric motor;

fourth means, provided with equivalent characteristics to that of the electric motor and connected to the first means for receiving the torque current, for generating a first reference speed indicative signal representing a revolution speed of the electric motor corresponding to the input torque current;

sixth means, receiving the first reference signal, for deriving a difference between the first reference signal value and a desired motor speed representative value for controlling the first means for reducing the difference between the first reference signal value and the desired motor speed representative value to zero;

tenth means interposed between the first means and at least one of the electric motor and the fourth means, for limiting the torque current to be supplied to at least one of the electric motor and the fourth means within a predetermined range,

the tenth means comprising a first limiter interposed between the first means and the fourth means for limiting torque current to be supplied to the fourth means within a first given range and a second limiter interposed between the first means and the electric motor for limiting torque current to be supplied to the electric motor within a second given range;

seventh means responsive to the motor speed indicative signal and the first reference speed indicative signal for deriving a difference between the motor speed indicative signal value and the first reference speed indicative signal value to produce a speed error signal; and

eighth means, responsive to the speed error signal, for deriving a compensation signal based on the speed error signal value for modifying the torque current so as to compensate the speed error between the motor speed indicative signal value and the first reference speed indicative signal value. The second limiter may be provided between the first limiter and the electric motor.

Furthermore, the motor speed control system may further comprise:

third means for generating a known frequency of a frequency signal which is to be added to the basic torque current for driving the electric motor with a modified torque current;

fifth means, provided equivalent characteristics to that of the electric motor and connected to the third means for receiving the frequency signal, for generating a second reference speed indicative signal representative of a revolution speed of the electric motor corresponding to the input frequency signal;

the seventh means receiving the motor speed indicative signal, the first reference speed indicative signal and the second reference speed indicative signal, for deriving a difference between the motor speed indicative signal value and a sum value of the first and second reference speed indicative signal values to produce a speed error signal;

ninth means, receiving the speed error signal and the frequency signal, for deriving an inertia representative data representative of an assumed inertia moment on the electric motor, and correcting a transfer characteristics of at least one of circuit components in such a manner that the inertia dependent factor in the sixth means becomes coincidence with that of the electric motor.

## BRIEF DESCRIPTION OF THE DRAWINGS

The present invention will be understood more fully from the detailed description given herebelow and from the accompanying drawings of the preferred embodiment of the invention, which, however, should not be taken to limit the invention to the specific embodiment but are for explanation and understanding only.

In the drawings:

Fig. 1 is a conceptually illustrated block diagram of the first embodiment of a motor speed control system, according to the invention;

Fig. 2 is a block diagram of the first embodiment of the motor speed control system of Fig. 1;

Fig. 3 is a partial and explanatorily established block diagram showing circuit components for motor speed control in the first embodiment of the motor speed control system of Fig. 1;

Fig. 4 is a partial and explanatorily established block diagram showing circuit components for adjusting the electric motor speed following to variation of speed of dummy load models;

Fig. 5 is a logical illustration of the first embodiment of the motor speed control system of Fig. 1;

Fig. 6 is a conceptually illustrated block diagram of the second embodiment of a motor speed control system, according to the invention;

Fig. 7 is a block diagram of the second embodiment of the motor speed control system of Fig. 6;

Fig. 8 is a block diagram equivalent to that illustrated in Fig. 7 but showing algorithum of motor speed control implemented by the second embodiment of the motor speed control system of Fig. 7;

Fig. 9 is a schematic and conceptually illustrated block diagram of the third embodiment of a motor speed control system according to the present invention;

Fig. 10 is a flowchart of a first limiting operation to be performed by the third embodiment of a motor speed control system of Fig. 9;

Fig. 11 is a flowchart of a second limiting operation to be performed by the third embodiment of a motor speed control system of Fig. 9; and

Fig. 12 is a chart showing variation of a motor revolution speed in relation to a time.

## DESCRIPTION OF THE PREFERRED EMBODIMENT

Referring now to the drawings, particularly to Fig. 1, the first embodiment of a motor speed control system, according to the present invention, generally comprises a control circuit 1 an electric motor 2 to which a load is applied. The control circuit 1 has a motor speed controller 11, to which a desired motor speed data Ws is input. The motor speed controller 11 is connected to the electric motor 2 via adders 18 and 15 which will be discussed later. The motor speed controller 11 outputs a torque current It to the electric motor 2. The motor speed controller 11 is also connected to a first dummy load model 13a having characteristics equivalent to the electric motor 2. The first dummy load model 13a is arranged in parallel to the electric motor 2 and receives the torque current It. Based on the torque current It, the first dummy load model 13a produces a first dummy speed representative data W indicative of a speed of the first dummy load model derived at equivalent condition to that of the electric motor. The first dummy load model 13a feeds the derived first dummy speed representative data W to the motor speed controller 11 as a feedback data.

The motor speed controller 11 compares the first dummy speed representative data W with the desired motor speed data Ws to obtain the difference therebetween. The motor speed controller 11 derives the magnitude of torque current It on the basis of the difference for reducing the difference to zero. Therefore, the first dummy load model 13a and the motor speed controller 11 forms a CLOSED LOOP for feedback controlling the motor speed.

The shown embodiment of the motor speed control system also has a second dummy load model 13b which has equivalent characteristics to the electric motor 2 to be controlled. The second dummy load model 13b is connected to a random noise generator circuit 17 generating a random noise current, to receive the random noise current from the latter. The second dummy load model 13b generates an output variable depending upon the random noise current input from the random noise generator circuit 17. The output of the second dummy load model 13b will be hereafter referred to as "inertia indicative data" is fed to a subtractor 14 to which the first dummy speed representative data W and a motor speed indicative data Wr as a data representative of the actual revolution speed of the electric motor 2. The subtractor 14 subtracts the actual motor speed data Wr from the sum value of the first dummy speed representative data W and the inertia indicative data to produce a speed difference indicative data. This speed difference indicative data e is fed to a compensation circuit 12 which has transfer function consisted of a proportional element and an integral element to produce a speed difference dependent compensation signal. This compensation signal is fed to the adder 15 to be added to the motor control signal so that the motor speed can be adjusted to reduce the error to be derived in the subtractor to be zero.

The random noise current of the random noise generator circuit 17 is fed to the adder 18 and to an assumed inertia moment generator circuit 16. The assumed inertia moment generator circuit 16 further receives the speed difference indicative data from the subtractor and derives an assumed inertia moment on the electric motor 2 on the basis of the random noise current from the random noise generator circuit 17 and the difference indicative data.

Detailed construction of the circuit components of the aforementioned first embodiment of the motor speed control system will be discussed herebelow with reference to Fig. 2. The motor speed controller 11 comprises transfer elements 111 and 112 and a subtractor element 113. The subtractor element 113 receives the desired motor speed data Ws and the first dummy speed representarive data W. The subtractor 113 outputs a speed error data $\Delta W$ (=Ws - W) indicative of the speed error of the actual motor speed versus the desired motor speed.

As long as the characteristics of the electric motor 2 precisely coincides with the first dummy load model 13a, the first dummy speed representative data W precisely represents the motor speed of the electric motor 2. Therefore, adjusting the characteristics of the first dummy load model 13a to match that of the electric motor 2, precise feedback control of the motor speed to the desired motor speed Ws can be established.

The transfer element 111 is provided transfer characteristics defined by (Kp′ + Ki′/S), where Kp′ and Ki′ are given constant values and S is an operator. Therefore, the transfer element 111 amplifies the speed error data $\Delta W$ with the transfer characteristics (Kp′ + Ki′/S) and feeds to an adder element 114. On the other hand, the transfer element 112 has a transfer characteristics Kq′S where Kq′ is predetermined value. The transfer characteristics Kq′S is variable depending upon the output of the inertia moment generator circuit 16. The transfer element 112 is interposed between the first dummy load model 13a and the adder element 114 to amplify the first dummy speed representative data W with the given characteristics Kq′S to input to the adder element 114. The adder element 114 adds the input from the transfer elements 111 and 112 to derive the torque current It to feed the electric motor 2 via the adders 18 and 15. To the adder 18, the random noise of the random noise generator circuit 17 is input. On the other hand, to the adder 15, the compensation signal of the compensation circuit 12 is input. Therefore, the input to the electric motor 2 has a value corresponding to a sum value of the torque current It, the random noise of the random noise generator circuit 17 and the compensation signal of the compensation circuit 12.

The electric motor 2 has transfer elements 201 and 202 and an adder 203 interposed between the transfer elements 201 and 202. The transfer element 201 is provided a transfer characteristics Km. On the other hand, the transfer element 307 is provided a transfer characteristics of 1/JrS. The transfer element 201 amplifies the torque current It with the given transfer characteristics Km. The output of the transfer element 201 is input to the adder 203. On the other hand, the adder 203 is also connected to a a load to receive therefrom a torque load indicative data $T_L$. The adder 203 thus produce an output as a sum of the output of the transfer element 201 and the torque load indicative data $T_L$. The transfer element 202 receives and amplifies the adder output with the given transfer characteristics 1/JrS to output the motor speed indicative data Wr.

The torque current It is also fed to the first dummy load model 13a as set forth. The first dummy load model 13a has transfer elements 131 and 132 respectively corresponding to the transfer elements 201 and 202 of the electric motor 2. Namely, the transfer element 131 is provided a transfer characteristics Km. On the other hand, the transfer element 132 is provided a transfer characteristics 1/JS which is variable depending upon the output of the inertia moment generator circuit 16. With the transfer elements 131 and 132, the torque current It are amplified so as to be output as the first dummy speed representative data W.

Likewise, the second dummy load model 13b also has transfer elements 133 and 134 having corresponding transfer characteristics to that of the transfer elements 131 and 132 of the first dummy load model 13a and, in turn, to the electric motor 2. The transfer element 133 is connected to the random noise generator circuit 17 which is designed to produce a random noise set to have average value zero (0). The transfer elements 133 and 134 of the second dummy load model 13b amplifies the random noise with the given transfer characteristics Km and 1/JS to output the inertia indicative data to the subtractor 14.

The subtractor 14 subtracts the motor speed indicative data Wr from the sum value of the first dummy speed representative data W and the inertia indicative data to derive the speed difference indicative data e. The speed difference indicative data e is fed to the compensation circuit 12 which has a transfer element 121 provided transfer characteristics (Kr + Ks/S), where Kr and Ks are constants. The transfer element 121 amplifies the speed difference indicative data e with the set transfer characteristics (Kr + Ks/S) to output the compensation signal Ix.

The random noise generated by the random noise generator circuit 17 is also fed to the inertia moment generator circuit 16. The inertia moment generator circuit 16 has a lag element 161 connected to the random noise generator circuit 17 and feeds the random noise current In input from the latter with a predetermined lag time. The inertia moment generator circuit 16 also includes a transfer element 162 and a multiplier element 163. The transfer element 162 is provided a transfer characteristics of $KaT/(S + \tau)$ where Ka is predetermined constant, $\tau$ is time constant. On the other hand, multiplier element 163 receives the random noise current In delayed by the lag element 161 and the speed difference indicative data e. The multiplier element 163 derives a product of the random noise current In and the speed difference indicative data e. The produce (e x In) is fed to the transfer element 162 which serves as primary delay element. The transfer element 162 derives an average value of the produces received from the multiplier element 163 to output the assumed inertia moment representative data y. The inertia moment representative data y is fed to the transfer element 112 to adjust the Kq′ value of the transfer characteristics thereof. Similarly, the inertia moment representative data y is fed to the transfer elements 132 and 134 to adjust the J value of the transfer characteristics thereof. Therefore, the transfer characteristics Kq'S and 1/JS of the transfer elements 112, 132 and 134 are adjusted depending upon the assumed inertia moment which corresponds to the actual inertial applied to the electric motor 2.

Here, the circuit components relevant for controlling the speed of the first dummy load model 13a is illustrated in Fig. 3. The process of speed control in the first dummy load model 13a will be discussed with reference to Fig. 3. The manner of speed control of the first dummy load model can be illustrated by:

$$W(S) = \{(Kp \times S + Ki) \times Ws\}/\{(Kq + J) \times S^2 + Kp \times S + Ki\} \quad (1)$$

where

$Kp = Km \times Kp'$,

$Ki = Ki' \times Km$

$Kq = Km \times Kq'$

In the above equation (1), when the inertia moment Jr of the motor 2 varies to cause necessity of varying the inertia moment representative value J of the first dummy load load model 13a, the transfer function of the feedback loop can be maintained constant by adjusting the Kq' of the transfer element 112. Therefore, by adjusting the Kq' value of the transfer element 112, the transfer function of the transfer element 132 can be maintained unchanged.

On the other hand, circuit components relevant for assuming the inertia moment Jr of the electric motor 2 are illustrated in Fig. 4. Manner of deriving the assumed motor inertia moment Jr will be discussed herebelow with reference to Fig. 4. As will be seen from Fig. 4, the output of the subtractor 14 as the speed difference representative data e is derived by dubtracting the motor speed indicative data Wr from the sum of the outputs of the first and second dummy load models 13a and 13B. The speed difference representative data e can be illustrated by:

$$e(S) = S/(S^2 + KmKr/J \times S + KmKs/J) \times \{Km/J - Km/Jr) \times (It + In) - TL/Jr\} \quad (2)$$

The multiplier element 163 receives the speed difference indicative data e from the subtractor 14 and the random noise current In from the random noise generator 17 as seen from Fig. 2. The output of the multiplier element 163, which presents the product of the speed difference indicative data e and the random noise current In, is integrated in the transfer element 162 to derive the inertia moment representative data y. Here, since the random noise current In is formulated to have the average value zero, the component associated with the random noise current In in the foregoing equation (2) becomes zero as integrated in the transfer element. The torque load $T_L$ and the torque current It can be regarded as known value in derivation of the inertia moment representative data y. Therefore, the foregoing equation (2) can be regarded as an equation having a variable which varies depending upon a difference of the inertia moments Jr and J in the electric motor 2 and the first dummy load model. Therefore, by adjusting the inertia J of the first dummy load model 13a according to the following equation:

$$J_n = J_{n-1} \times (1 + y) \quad (3)$$

where $J_n$ is instantaneous inertia representative value of the first dummy load model 13a, and

$J_{n-1}$ is an intertia representative value of the first dummy load model 13a in an immediately preceding calculation cycle.

the speed difference indicative data e can be adjusted to zero.

In the alternative, the inertia moment representative data y can be described by

$$y = L^{-1}\{Y\}$$

where L is Laplace transformation cofficient and $L^{-1}$ is Laplace reverse transformation coefficient, and

$$Y = Ka\tau/(S + \tau) \times L\{In \times e\} \quad (4)$$

In order to maintain the transfer function of the CLOSED LOOP of motor speed control system despite variation of the inertia moment J in the first dummy load model 13a, it becomes necessary to adjust the constant Kq' in the transfer element 112 in the motor speed controller 11. Adjustment of the constant Kq' is performed by the following equation:

$$Kq'_n = Kq'_{n-1} - J_{n-1} \times y \quad (5)$$

where $Kq'_n$ is a constant in the current calculation cycle, and

$Kq'_{n-1}$ is a constant in the immediately preceding calculation cycle.

Fig. 5 explanatorily illustrates circuit components associated for adjusting the Kq' constant. As will be appreciated, in Fig. 5, the circuit component which is associated for torque current dependent values are neglected for simplification of the disclosure.

As will be seen from Fig. 5, the second dummy load model 13b as labeled (Km/JS), the electric motor 2 as illustrated in a form avoiding the torque load factor $T_L$ and as labeled (Km/JrS), the subtractor 14 and the multiplier element 163 in the inertia moment generator circuit 16 form a noise multiplier stage. The transfer element 162 of the inertia moment generator circuit 16, serves as the primary delay factor as set forth above.

In Fig. 5, the J value derivation stage is illustrated as pure functional block for implementing the arithmetic operation, according to the foregoing equation (3). As will be appreciated,in a multiplier stage (labeled by "X"), the arithmetic operation according to the equation (3) is performed. The resultant value is output as the inertia representing parameter J of the first and second dummy load models 13a and 13b. The output of the multiplier stage (X) is fed back via a delay (labeled as "$Z^{-1}$") to the multiplier stage as $J_{n-1}$ data.

As will be appreciated herefrom, the shown embodiment of the motor speed control system can provide improved and satisfactorily high response characteristics to variation of the inertia moment in the electric motor with simplified circuit construction and with simplified arithmetic operation process in derivation of the inertia moment of the dummy model.

Fig. 6 shows the second embodiment of the motor speed control system, according to the invention. Since the shown second embodiment replaces the random noise current generator circuit 17 in the foregoing first embodiment of the motor speed control system set forth above with a signal generator circuit 30. The common circuit components between the first and second embodiments will be represented by the same reference numerals for avoiding redundant disclosure.

The signal generator circuit 30 is designed to generate a sin wave signal $sin_{\omega nt}$ and a cos wave signal $cos_{\omega nt}$. The sin wave signal $sin_{\omega nt}$ is fed to the adder 18 and to the second dummy load model 13b. In the alternative, the cos wave signal $cos_{\omega nt}$ is fed to a inertia moment generator circuit 31. The second embodiment of the motor speed control system has a torque coefficient adjusting circuit 19. The torque coefficient adjusting circuit 19 is interposed between the adder 15 and the electric motor 2. The torque coefficient adjusting circuit 19 is also associated the inertia moment generator circuit 31 for varying the torque coefficient based on the input from the inertia moment generator circuit 31.

The inertia moment generator circuit 31 receives the speed difference indicative data e from the subtractor 14 and the cos wave signal $cos_{\omega nt}$ from the signal generator circuit 30 to derive an inertia moment indicative data y'. By the inertia moment indicative data y', the coefficient in the torque coefficient adjusting circuit 19 is adjusted so that inertia moments in the electric motor 2 and the second dummy load model 13b coincide to each other.

Fig. 7 shows detailed construction of the second embodiment of the motor speed control system according to the invention. In this embodiment, the inertia moment generator circuit 31 comprises a multiplier element 311, a primary delay element 312 which is labeled as "$Ka\tau/(S + \tau)$" and designed to integrate the input from the multiplier element for deriving an average value, and a transfer element 313 as labeled "1/S".

In Fig. 7, the circuit constructions of the motor speed controller 11, the electric motor 2, the compensation circuit 12, and the first and second dummy load models 13a and 13b are substantially the same as that in the former embodiment. Therefore, such common elements will be represented by the reference numerals and avoided redundant detailed discussion.

The operation of the motor speed control system of Fig. 7 will be discussed herebelow. In the following discussion, reference is made to Fig. 8 which shows the same circuit components to that of Fig. 7 but shown in a manner convenient for disclosing the algorithum of intertia variation compensating operation to be performed by the shown system.

When the inertia moment 1/JrS of the electric motor 2 varies, an error e of the speeds between the motor speed and the speeds of first and second dummy load models 13a and 13b which have the inertia moment 1/JS. As set forth above, the error is represented by the speed difference indicative data e as the output of the subtractor 14

The speed difference indicative data e can be illustrated by:

$$e = W + W_{DD} - Wr \quad (6)$$

where $W_{DD}$ is the output value of the second dummy load model 13b,

$$W = It \times 1/JS \quad (7)$$

$$W_{DD} = \sin\omega_n t \times 1/JS \quad (8)$$

$$Wr = \{It + \sin\omega_n t + e(Kr + Ks)\} \times Kh/Jrs \quad (9)$$

From the foregoing equations (7) to (9), the equation (6) can be modified as:

$$e = (IT + \sin\omega_n t) \times 1/JS - \{It + \sin_{\omega nt} + e(Kr + Ks)\} \times Kh/Jrs$$
$$= 1/\{1 + 1/JrS \times (Kr + Ks/S)\} \times (It + \sin\omega_n t) \times (1/Js - Kh/Jrs)$$
$$= S/(S^2 + KhKr/Jr \times S + KhKs/Jr) \times (It + \sin\omega_n t) \times (1/J - Kh/Jr) \quad (10)$$

By Fourier transformation, the equation can be transformed into:

$$F(e) = j\omega/\{(KhKs/Jr - \omega^2) + j\omega \times KhKr/Jr\} \times (F(It) + F(\sin\omega_n t) \times (1/J - Kh/Jr)$$
$$= j\omega\{ (KhKs/Jr - \omega^2) - j\omega \times KhKr/Jr\} \div \{ (KhKs/Jr - \omega^2)^2 + \omega KhKr/Jr\} \times (F(It) + F(\sin\omega_n t)) \times (1/J - Kh/Jr)$$
$$= \omega^2 \times KhKr/Jr \div \{ (KhKs/Jr - \omega^2)^2 + (\omega KhKr/Jr)^2\} + j\omega\{ (KhKs/Jr - \omega^2) \div \{ (KhKs/Jr - \omega^2)^2 + (\omega KhKr/Jr)^2\} \times (F\ It) + F(\sin\omega_n t)) \times (1/J - Kh/Jr) \quad (11)$$

where $\omega$ is angular frequency.

Here, assuming the angular frequency $\omega$ is $\omega n$, the equation (11) can be modified as:

$e = \omega n^2 x\ KhKr/Jr \div \{(KhKs/Jr - \omega n^2)^2 + (\omega nKhKr/Jr)^2\} + j\omega n\{(KhKs/Jr - \omega n^2) \div \{(KhKs/Jr - \omega n^2)^2 + (\omega nKhKr/Jr)^2\} \times (It - \sin\omega_n t) \times (1/J - Kh/Jr)$ (12)

Here, since the segments associated with It value becomes zero when multiplied by the cos wave signal $\cos\omega_n t$ and the produce is integrated, this segment will be ignored in the following discussion. The segments in the foregoing equation (12) are take as follows:

$$\omega n \times KhKr/Jr \div \{(KhKs/Jr - \omega n^2)^2 + (\omega nKhKr/Jr)^2\} = A$$

$$j\omega n\{(KhKs/Jr - \omega n^2) \div \{(KhKs/Jr - \omega n^2)^2 + (\omega nKhKr/Jr)^2\} = B$$

By this, the foregoing equation (12) can be modified as:

$$e = (A + jB) \times (1/J - Kh/Jr) \times \mathrm{Sin}\omega_n t) \quad (13)$$

This can be further modified as:

$$e(t) = (A\sin\omega_n t + B\cos\omega_n t) \times (1/J - Kh/Jr) \quad (14)$$

In the practice, inertia moment difference dependent control is peformed so as to make the speed difference indicative data e and the cos wave signal $\cos\omega_n t$ does not corelate. For this, a product of the e value and $\cos\omega_n t$ is obtained. An average value of the products is obtained by integrating. The integrated value C is illustrated by

$$C = 1/T \times \int_{-T/2}^{T/2} e(t) \times \cos\omega_n t \times dt \ \ldots \quad (15)$$

where T is a period of sin and cos waves

$$= 1/T \times \int_{-T/2}^{T/2} (A\sin\omega_n t \times \cos\omega_n t + B\cos\omega_n t) \times (1/J - Kh/Jr) \times \cos\omega_n t \times dt$$

$$= 1/T \times (1/J - Kh/Jr) \int_{-T/2}^{T/2} (A\sin\omega_n t \times \cos\omega_n t + B\cos^2\omega_n t)\, dt$$

$$= 1/T \times (1/J - Kh/Jr) \int_{-T/2}^{T/2} \{A \times \sin 2\omega_n t/2 + B \times (\cos 2\omega_n t - 1/2\}\, dt$$

$$= 1/T \times (1/J - Kh/Jr) \times A \int_{-T/2}^{T/2} (\sin 2\omega_n t/2)dt + B \int_{-T/2}^{T/2} (\cos 2\omega_n t - 1^{)}\, dt - B \int_{-T/2}^{T/2} (1/2)dt$$

$$= - B/2 \times (1/J - Kh/Jr) \ \ldots \quad (16)$$

The equation (16) can be converted into:

$$C = -1/2 \times (1/J - Kh/jr) \times \omega n(Kh \times Ks/Jr \times \omega n^2/\{(KhKS/Jr \times \omega n^2)^2 + (\omega n \times Kh \times Kr/Jr)^2 \quad (17)$$

So as to avoid corelation between the speed difference indicative data e and the cos wave signal $\cos\omega_n t$, the integrated value has to be zero (0). For this, the following condition must be established:

$$1/J - Kh/Jr = 0 \quad (18)$$

$$KhKs/Jr - \omega n^2 = 0 \quad (19)$$

From the equations (18) and (19), the following equations can be established:

$$Kh = Jr/J \quad (20)$$

$$Kh = Jr/Ks \times \omega n^2 \quad (21)$$

When adjustment of the torque coefficient of the torque coefficient adjusting circuit is performed utilizing tiny signal having a frequency of 20 Hz, under the condition in which $\omega n = 40\pi$ (rad/sec), Ks = 0.01045, Jr = 0.001741, the torque coefficient Kh becomes 20.94 which exceeds a limit. This can be compensated by the equation (20).

As will be appreciated, similarly to the foregoing first embodiment, the shown embodiment of the motor speed control system can exhibit satisfactorily high response characteristics.

Fig. 9 shows the third embodiment of a motor speed control system, according to the present invention. Though the following discussion will be given in relation to the schematically illustrated block diagram of the third embodiment of the invention, in which only essential circuit components are shown, the shown embodiment may be applicable for the first and second embodiments of the motor speed control systems set forth above.

As seen from Fig. 9, the shown embodiment of the motor speed control system, according to the invention, comprises a motor speed controller 40 which is connected to an electric motor 41 via a first limiter 42, an adder 43 and a second limiter 44. Also, the motor speed controller 40 is connected to a dummy load model 45 via the first limiter 42. The dummy load model 45 has an equivalent circuit construction and transfer characteristics to that of the electric motor 41. As will be appreciated that the dummy load model 45 may correspond to the first dummy load models in the foregoing first and second embodiments of the motor speed control systems.

The shown embodiment of the motor speed control system further comprises a compensation circuit 46 connected to a subtractor 47 which calculates an error between a motor speed Wr output from the electric motor 41 and a dummy speed W of the dummy load model 45 to produce a speed difference indicative data e. The compensation circuit 47 is provided a transfer characteristics of Kr + Ks/S to derive a compensation signal Ix on the basis of the speed difference indicative data e. The compensation signal is fed to the adder 43 to be added with the torque current It input from the first limiter 42.

The motor speed controller 40 is connected to a subtractor 48 which receives a desired motor speed data Ws and the dummy speed data W from the dummy load model 45 to derive an error therebetween. The speed error indicative data en derived by the subtractor 48 is fed to the motor speed controller 40. The motor speed controller 40 derives the torque current It on the basis of the speed error data en. The first limiter 42 receives the torque current It output from the motor speed controller 40 and prevents the current to be applied to the dummy load model 45 from becoming excessive.

The torque current It derived by the motor speed controller 40 can be illustrated by the following equation:

$$It(n) = KEN(n) + EX(n)$$

where

KEN(n) = Kp x en(n)

EX(n) = Ex(n-1) + Ts/2 x KI {en(n-1) + En(n)}

Ts: sampling time, and

n: occurrence of sampling

On the other hand, since the transfer characteristics of the compensation circuit 46 can be described by Kr + Ks/S as set forth above, the compensation signal Ix can be illustrated by:

$$Ix(n) = ERKR(n) + IEX(n)$$

where

ERKR(n) = Kr x e(n)

IEX(n) = IEX(n-1) + Ts/s x Ks x {e(n-1) + e(n)}

Disregarding the first and second limiters 42 and 44, the torque current ITRM(n) to be input to the electric motor 41 can be illustrated by:

$$ITRM(n) = It(n) + Ix(n)$$

Here, the first limiter 42 is set a first limit value Liml and the second limiter 44 is set a second limit value Linl. Therefore, when the torque current It output from the motor speed controller 40 becomes greater than the first limit Liml, the first limiter 42 limits the values It(n) and EX(n) respectively to Liml and (Liml - KEN(n)). On the other hand, when the torque current ITRM(n) to be applied to the electric motor 41 becomes greater than the second limit Linl, the IEX(n) value is modified by (Linl - ERKR(n) - It(n)), and the torque current ITRM is set at Linl.

Fig. 10 shows a process of operation of the first limiter 42. As will be seen from Fig. 10, an active first limiter indicative flag FLGIT is reset at a step S1. At a step S2, the torque current It(n) is checked whether it is greater than or equal to zero (0). When the torque current It(n) as checked at the step S2, is smaller than zero, check is performed whether (It + $It_{max}$ ($It_{max}$ is maximum torque current)) is greater than zero (0). When the (It + $It_{max}$) is smaller than or equal to zero, the torque current It(n) is set at a minimum torque current $It_{min}$, at a step S4. Thereafter, the active first limiter flag FLGIT is set at a step S5.

On the other hand, when the torque current It(n) is greater than or equal to zero as checked at the step S2, the value (It(n) + $It_{min}$) is checked whether it is smaller than zero, at a step S6. When the value (It(n) + $It_{min}$) is greater than or equal to zero, the torque current It(n) is set at the maximum torque current $It_{max}$, at a step S7. Then, the active first limiter flag FLGIT is set at a step S8.

After setting the active first limiter flag FLGIT at the step S5 or S8 or when the value (It + $It_{min}$) is greater

than or equal to zero as checked at the step S3, the active first limiter flag FLGIT is checked at a step S9. When the flag FLGIT is not set as checked at the step S9, the EX(n) value is set in a value of ($It_{max}$ - |KEN(n)|) at a step S10. Then, the torque current It(n) is checked whether it is greater than or equal to zero, at a step S11. When the torque current It(n) is smaller than zero as checked at the step S11, the sign of the EX(n) value is inverted to -EX(n) at a step S12.

After the step S12, when the active first limiter flag FLGIT is set as checked at the step S9, or when the torque current It(n) is greater than or equal to zero as checked at the step S11, process goes END.

Fig. 11 shows a process showing operation of the second limiter 44. Similarly to the foregoing operation of the first limiter 42, an active second limiter indicative flag FLGITX is reset at a step S21. The, the output value ITR(n) of the adder 43 is checked whether it is smaller than zero (0), at a step S22. When the ITR(n) value is greater than or equal to zero as checked at the step S22, a value (ITR(n) + $It_{min}$) is checked whether it is smaller than zero at a step S23. If the value (ITR(n) + $It_{min}$) is greater than or equal to zero as checked at the step S23, the value (ITR(n) + $It_{max}$) is set as the input current for max the electric motor 41, at a step S24. Then, the active second limiter indicative flag FLGITX is set at a step S25.

On the other hand, when the ITR(n) value as checked at the step S22, is greater smaller than zero, a value (ITR(n) + $It_{max}$) is checked whether it is greater than zero at a step S26. When the value (ITR(n) + $It_{max}$) is smaller than or equal to zero as checked at the step S26, the ITR(n) value is set at the minimum current value $It_{min}$ at a step S27. Then, the active second limiter indicative flag FLGITX is set at a step S28.

After the process of the step S25 or the step S28, when the (ITR(n) + $It_{min}$) is smaller than zero as checked at the step S23 or when the value (ITR(n) + $It_{max}$) is greater than zero as checked at the step S26, the active second limiter indicative flag FLGITX is checked at a step S29. When the active second limiter indicative flag FLGITX is set as checked at the step S29, the IEX(n) value is calculated by:

$$IEX(n) = It_{max} - |ERKR(n) + It(n)|$$

at a step S30. Then, the ITR value is checked whether it is greater than zero at a step S31. When the ITR value is greater than zero as checked at the step S31, the sign of the IEX(n) value is inverted into -IEX(n) at a step S32.

After the step S32, when the active second limiter indicative flag FLGITX is set as checked at the step S29, or when the ITR value is smaller than or equal to zero as checked at the step S31, the ITR value is set as the ITRM value, at a step S33.

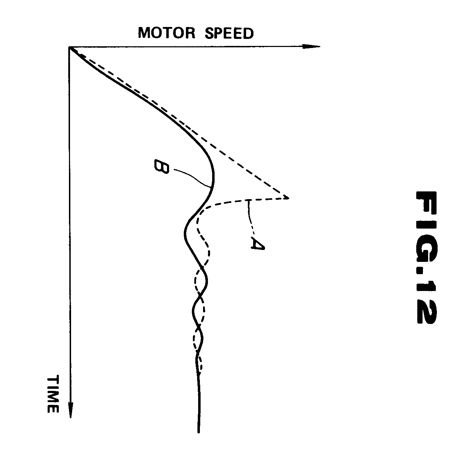

By this, response characteristics can be improved for providing smooth transition in motor speed variation as illustrated by line B in Fig. 12. The motor speed variation characteristics B as illustrated in Fig. 12, is compared with that in the conventional characteristics which is illustrated by the broken line.

## Claims

1. A motor speed control system comprising:

first means (11) for generating a basic torque current for driving an electric motor (2) at a revolution speed corresponding the magnitude of said torque current;

second means (2) for producing a motor speed indicative signal representative of a revolution speed of said electric motor (2),

third means (17) for generating a known frequency of a frequency signal which is to be added to said basic torque current for driving said electric motor with a modified torque-current;

fourth means (13a), provided equivalent characteristics to that of said electric motor (2) and connected to said first means (11) for receiving said torque current, for generating a first reference speed indicative signal representative of a revolution speed of said electric motor (2) corresponding to the input torque current;

fifth means (13b), provided equivalent characteristics to that of said electric motor (2) and connected to said third means (17) for receiving said frequency signal, for generating a second reference speed indicative signal representative of a revolution speed of said electric motor (2) corresponding to the input frequency signal;

sixth means (11), receiving said first reference signal, for deriving a difference between said first reference signal value and a desired motor speed representative value for controlling said first means (11) for reducing the difference between said first reference signal value and said desired motor speed representative value to zero;

seventh means (14) receiving said motor speed indicative signal, said first reference speed indicative signal and said second reference speed indicative signal, for deriving a difference between said motor speed indicative signal value and a sum value of said first and second reference speed indicative signal values to produce a speed error signal;

eighth means (12), responsive to said speed error signal, for deriving a compensation signal based on said speed error signal value for modifying said torque current for compensating said speed error between said motor speed indicative signal value and said sum value; and

ninth means (16), receiving said speed error signal and said frequency signal, for deriving an inertia representative data representative of an assumed inertia moment on said electric motor (2), and correcting a transfer characteristics of at least one of circuit components in such a manner that the inertia dependent factor in said fourth means becomes coincidence with that of said electric motor (2).

2. A motor speed control system as set forth in claim 1, wherein said ninth means (16) further modifies transfer characteristics of at least one of circuit component for maintaining transfer function of overall motor speed controlling loop constant.

3. A motor speed control system as set forth in claim 1, wherein said third means (17) is so designed as to produce said frequency signal which has a signal value variation characteristics to have an average value zero.

4. A motor speed control system as set forth in claim 1, wherein said third means (17) is so designed as to produce said frequency signal which has a signal value variation characteristics, in which an integrated value becomes zero.

5. A motor speed control system as set forth in claim 1, wherein said fourth and fifth means (13a,13b) have first and second transfer elements (131,132,133,134) which are variable of transfer characteristics, said first and second transfer elements (131,132,133,134) of fourth and fifth means (13a,13b) being adjusted the transfer characteristics so as to reduce said speed error signal value to zero on the basis of said inertia representative data of said ninth means (16).

6. A motor speed control system as set forth in claim 5, wherein said sixth means (11) includes a third transfer element (112) which is variable of transfer characteristics depending on said inertia representative data, said transfer characteristics of said transfer element (112) being adjusted so as to maintain transfer function of overall speed control loop constant.

7. A motor speed control system as set forth in claim 1, which further comprises a transfer element (112) variable of transfer characteristics depending upon said inertia representative data for adjusting the modified torque current to be supplied to said electric motor so as to compensate difference of inertia factors in said electric motor and said fourth means.

8. A motor speed control system comprising:

a) first means (11, 40) for generating a torque current to drive an electric motor (2, 41) at a revolution speed corresponding to the magnitude of said torque current;

b) second means (2, 41) for producing a motor speed indicative signal representing a revolution speed of said electric motor (2, 41):

c) fourth means (13a, 45), provided with equivalent characteristics to that of said electric motor and connected to said first means, for generating a first reference speed indicative signal representing a revolution speed of said electric motor (2, 41) corresponding to the input torque current;

d) sixth means (11, 40), receiving said first reference signal, for deriving a difference between said first reference signal value and a desired motor speed representative value for controlling said first means (11, 40) for reducing the difference between said first reference signal value and said desired motor speed representative value to zero;

e) tenth means (42, 44) interposed between said first means (11, 40) and at least one of said electric motor (2, 41) and said fourth means, for limiting said torque current to be supplied to at least one of said electric motor and said fourth means within a predetermined range, said tenth means (42, 44) comprising a first limiter (42) interposed between said first means (11, 40) and said fourth means (13a, 45) for limiting torque current to be supplied to said fourth means (13a, 45) within a first given range and a second limiter (44) interposed between said first means (11, 40) and said electric motor (2, 41) for limiting torque current to be supplied to said electric motor (2, 41) within a second given range;

g) seventh means (14, 47) responsive to said motor speed indicative signal and said first reference speed indicative signal for deriving a difference between said motor speed indicative signal value and said first reference speed indicative signal value to produce a speed error signal; and

h) eighth means (12, 46), responsive to said speed error signal, for deriving a compensation signal based on said speed error signal value for modifying said torque current so as to compensate for said speed error between said motor speed indicative signal value and said first reference speed indicative signal value.

**9.** A motor speed control system as set forth in claim 8, wherein said second limiter (44) is provided between said first limiter (42) and said electric motor (2, 41).

**10.** A motor speed control system as set forth in claim 8 or 9 which further comprises:
third means (30) for generating a known frequency of a frequency signal which is to be added to said basic torque current for driving said electric motor (2, 41) with a modified torque current;
fifth means (13b), provided equivalent characteristics to that of said electric motor and connected to said third means (30), for receiving said frequency signal, for generating a second reference speed indicative signal representative of a revolution speed of said electric motor (2, 41) corresponding to the input frequency signal;
said seventh means (14, 47) receiving said motor speed indicative signal, said first reference speed indicative signal and said second reference speed indicative signal, for deriving a difference between said motor speed indicative signal value and a sum value of said first and second reference speed indicative signal values to produce a speed error signal;
ninth means (31), receiving said speed error signal and said frequency signal, for deriving an inertia representative data representative of an assumed inertia moment on said electric motor, and correcting a transfer characteristics of at least one of circuit components in such a manner that the inertia dependent factor in said sixth means becomes coincidence with that of said electric motor (2, 41).

## Patentansprüche

**1.** Ein Motorgeschwindigkeitsregelsystem mit:
einem ersten Mittel (11) zum Erzeugen eines grundlegenden Drehmomentstromes zum Antreiben eines elektrischen Motors (2) mit einer Umdrehungsgeschwindigkeit, die der Größe des Drehmomentstromes entspricht;
einem zweiten Mittel (2) zum Erzeugen eines Motorgeschwindigkeit indikativen Signals repräsentativ für eine Umdrehungsgeschwindigkeit des elektrischen Motors (2),
einem dritten Mittel (17) zum Erzeugen einer bekannten Frequenz eines Frequenzsignals, welches zu dem grundlegenden Drehmomentstrom zum Antreiben des elektrischen Motors mit einem modifizierten Drehmomentstrom zu addieren ist;
einem vierten Mittel (13a), das mit äquivalenten Charakteristiken zu jenen des elektrischen Motors (2) vorgesehen und mit dem ersten Mittel (11) zum Empfangen des Drehmomentstromes verbunden ist, zum Erzeugen eines ersten Referenzgeschwindigkeit indikativen Signals repräsentativ für eine Umdrehungsgeschwindigkeit des elektrischen Motors (2), entsprechend dem Eingangsdrehmomentstrom;
einem fünften Mittel (13b), das mit äquivalenten Charakteristiken zu jenen des elektrischen Motors (2) vorgesehen und mit dem dritten Mittel (17) zum Empfangen des Frequenzsignals verbunden ist, um ein zweites Referenzgeschwindigkeit indikatives Signal repräsentativ für eine Umdrehungsgeschwindigkeit des elektrischen Motors (2) entsprechend dem eingegebenen Frequenzsignal zu erzeugen;
einem sechsten Mittel (11), das das erste Referenzsignal zum Herleiten einer Differenz zwischen dem ersten Referenzsignalwert und einem für eine gewünschte Motorgeschwindigkeit repräsentativen Wert zum Regeln des ersten Mittels (11) zum Reduzieren der Differenz zwischen dem ersten Referenzsignalwert und dem für die gewünschte Motorgeschwindigkeit repräsentativen Wert auf Null empfängt;
einem siebten Mittel (14), das das Motorgeschwindigkeit indikative Signal, das erste Referenzgeschwindigkeit indikative Signal und das zweite Referenzgeschwindigkeit indikative Signal zum Herleiten einer Differenz zwischen dem Motorgeschwindigkeit indikativen Signalwert und einem Summenwert der ersten und zweiten Referenzgeschwindigkeit indikativen Signalwerte empfängt, um ein Geschwindigkeitsfehlersignal zu erzeugen;
einem achten Mittel (12), das auf das Geschwindigkeitsfehlersignal anspricht zum Herleiten eines auf dem Geschwindigkeitsfehlersignalwert beruhenden Kompensationssignals zum Modifizieren des Drehmomentstromes zum Kompensieren des Geschwindigkeitsfehlers zwischen dem Motorgeschwindigkeit indikativen Signalwert und dem Summenwert; und
einem neunten Mittel (16), das das Geschwindigkeitsfehlersignal und das Frequenzsignal zum Herleiten trägheitsrepräsentativer Daten, die für ein angenommenes Trägheitsmoment auf dem elektrischen Motor (2) repräsentativ sind, empfängt und eine Transfercharakteristik von zumindest einem der Schaltkreiskomponenten in einer derartigen Weise korrigiert, daß der trägheitsabhängige Faktor in dem vierten Mittel koinzident mit jenem des elektrischen Motors (2) wird.

2. Ein Motorgeschwindigkeitsregelsystem nach Anspruch 1, worin das neunte Mittel (16) weiter Transfercharakteristiken von zumindest einer der Schaltkreiskomponenten zum Aufrechterhalten der Transferfunktion der Gesamtmotorgeschwindigkeits-regelnden Schleifenkonstante modifiziert.

3. Ein Motorgeschwindigkeitsregelsystem nach Anspruch 1, worin das dritte Mittel (17) dazu entworfen ist, das Frequenzsignal zu erzeugen, welches eine Signalwertvariationscharakteristiken aufweist, um einen Mittelwert Null zu besitzen.

4. Ein Motorgeschwindigkeitsregelsystem nach Anspruch 1, worin das dritte Mittel (17) dazu entworfen ist, das Frequenzsignal zu erzeugen, welches eine Signalwertvariationscharakteristiken aufweist, in welchen ein integrierter Wert Null wird.

5. Ein Motorgeschwindigkeitsregelsystem nach Anspruch 1, worin die vierten und fünften Mittel (13a, 13b) erste und zweite Transferelemente (131, 132, 133, 134) aufweisen, welche von variablen Transfercharakteristiken sind, wobei die ersten und zweiten Transferelemente (131, 132, 133, 134) der vierten und fünften Mittel (13a, 13b) auf die Transfercharakteristiken eingestellt sind, um so den Geschwindigkeitsfehlersignalwert auf Null auf der Grundlage der trägheitsrepräsentativen Daten des neunten Mittels (16) zu verringern.

6. Ein Motorgeschwindigkeitsregelsystem nach Anspruch 5, worin das sechste Mittel (11) ein drittes Transferelement (112) umfaßt, welches von variablen Transfercharakteristiken ist, die von den trägheitsrepräsentativen Daten abhängen, wobei die Transfercharakteristiken des Transferelementes (112) eingestellt sind, um so die Transferfunktion der Gesamtgeschwindigkeitsregelschleife konstant zu halten.

7. Ein Motorgeschwindigkeitsregelsystem nach Anspruch 1, welches weiter ein Transferelement (112) von variablen Transfercharakteristiken umfaßt, die von den trägheitsrepräsentativen Daten zum Einstellen des modifizierten Drehmomentstromes, der an den elektrischen Motor zu liefern ist, abhängig sind, um so die Differenz der Trägheitsfaktoren in dem elektrischen Motor und dem vierten Mittel zu kompensieren.

8. Ein Motorgeschwindigkeitsregelsystem mit:
a) einem ersten Mittel (11, 40) zum Erzeugen eines Drehmomentstromes, um einen elektrischen Motor (2, 41) mit einer Umdrehungsgeschwindigkeit entsprechend der Größe des Drehmomentstromes anzutreiben;
b) einem zweiten Mittel (2, 41) zum Erzeugen eines Motorgeschwindigkeit indikativen Signals, das eine Umdrehungsgeschwindigkeit des elektrischen Motors (2, 41) repräsentiert:
c) einem vierten Mittel (13a, 45), das mit Charakteristiken äquivalent zu jenen des elektrischen Motors vorgesehen und mit dem ersten Mittel verbunden ist, um ein erstes Referenzgeschwindigkeit indikatives Signal, das eine Umdrehungsgeschwindigkeit des elektrischen Motors (2, 41) entsprechend dem Eingangsdrehmomentstrom repräsentiert, zu erzeugen;
d) einem sechsten Mittel (11, 40), das das erste Referenzsignal empfängt, zum Herleiten einer Differenz zwischen dem ersten Referenzsignalwert und einem für eine gewünschte Motorgeschwindigkeit repräsentativen Wert zum Regeln des ersten Mittels (11, 40) zum Verringern der Differenz zwischen dem ersten Referenzsignalwert und dem für die gewünschte Motorgeschwindigkeit repräsentativen Wert auf Null;
e) einem zehnten Mittel (42, 44), das zwischen das erste Mittel (11, 40) und zumindest eines von dem elektrischen Motor (2, 41) und dem vierten Mittel zum Begrenzen des an zumindest eines von dem elektrischen Motor und dem vierten Mittel zu liefernden Drehmomentstromes innerhalb eines vorbestimmten Bereiches gesetzt ist, wobei das zehnte Mittel (42, 44) einen ersten Begrenzer (42) aufweist, der zwischen das erste Mittel (11, 40) und das vierte Mittel (13a, 45) zum Begrenzen des an das vierte Mittel (13a, 45) zu liefernden Drehmomentstromes innerhalb eines ersten gegebenen Bereiches und einen zweiten Begrenzer (44) umfaßt, der zwischen das erste Mittel (11, 40) und den elektrischen Motor (2, 41) zum Begrenzen des an den elektrischen Motor (2, 41) zu liefernden Drehmomentstromes innerhalb eines zweiten gegebenen Bereiches gesetzt ist;
g) einem siebten Mittel (14, 47), das auf das Motorgeschwindigkeit indikative Signal und das erste Referenzgeschwindigkeit indikative Signal zum Herleiten einer Differenz zwischen dem Motorgeschwindigkeit indikativen Signalwert und dem ersten Referenzgeschwindigkeit indikativen Signalwert anspricht, um ein Geschwindigkeitsfehlersignal zu erzeugen; und
h) einem achten Mittel (12, 46), das auf das Geschwindigkeitsfehlersignal anspricht zum Herleiten eines Kompensationssignales, das auf dem Geschwindigkeitsfehlersignalwert zum Modifizieren des Drehmomentstromes beruht, um so auf den Geschwindigkeitsfehler zwischen dem Motorgeschwindigkeit indikativen Signalwert und dem ersten Referenzgeschwindigkeit indikativen Signalwert zu kompensieren.

9. Ein Motorgeschwindigkeitsregelsystem nach Anspruch 8, worin der zweite Begrenzer (44) zwischen dem ersten Begrenzer (42) und dem elektrischen Motor (2, 41) vorgesehen ist.

10. Ein Motorgeschwindigkeitsregelsystem nach Anspruch 8 oder 9, welches weiter umfaßt:
ein drittes Mittel (30) zum Erzeugen einer bekannten Frequenz eines Frequenzsignals, welches zu dem grundlegenden Drehmomentstrom zum Antreiben des elektrischen Motors (2, 41) mit einem modifizierten Drehmomentstrom zu addieren ist;
ein fünftes Mittel, das mit Charakteristiken äquivalent zu jenen des elektrischen Motors vorgesehen und mit dem dritten Mittel (30) verbunden ist, zum Empfangen des Frequenzsignals, zur Erzeugung eines zweiten Referenzgeschwindigkeit indikativen Signals, das für eine Umdrehungsgeschwindigkeit des elektrischen Motors (2, 41) entsprechend dem Eingangsfrequenzsignal repräsentativ ist;
wobei das siebte Mittel (14, 47) das Motorgeschwindigkeit indikative Signal, das erste Referenzgeschwindigkeit indikative Signal und das zweite Referenzgeschwindigkeit indikative Signal zum Herleiten einer Differenz zwischen dem Motorgeschwindigkeit indikativen Signalwert und einem Summenwert der ersten und zweiten Referenzgeschwindigkeit indikativen Signalwerte empfängt, um ein Geschwindigkeitsfehlersignal zu erzeugen;
ein neuntes Mittel (31), das das Geschwindigkeitsfehlersignal und das Frequenzsignal empfängt, zum Herleiten trägheitsrepräsentativer Daten, die für ein angenommenes Trägheitsmoment auf dem elektrischen Motor repräsentativ sind, und eine Transfercharakteristik von zumindest einer der Schaltkreiskomponenten in einer derartigen Weise korrigiert, daß der trägheitsabhängige Faktor in dem sechsten Mittel koinzident mit jenem des elektrischen Motors (2, 41) wird.

## Revendications

1. Ensemble de commande de vitesse de moteur comprenant :
un premier dispositif (11) destiné à créer un courant fondamental de couple destiné au pilotage d'un moteur électrique (2) à une vitesse de rotation correspondant à l'amplitude du courant de couple,
un second dispositif (2) destiné à produire un signal indicatif de la vitesse du moteur, représentatif d'une vitesse de rotation du moteur électrique (2),
un troisième dispositif (17) générateur d'une fréquence connue d'un signal en fréquence qui est destiné à être ajouté au courant fondamental de couple pour le pilotage du moteur électrique avec un courant modifié de couple,
Un quatrième dispositif (13a) ayant des caractéristiques équivalentes à celles du moteur électrique (2) et connecté au premier dispositif (11) afin qu'il reçoive le courant de couple et qu'il crée un premier signal indicatif de vitesse de référence représentatif d'une vitesse de rotation du moteur électrique (2) qui correspond au courant de couple d'entrée,
un cinquième dispositif (13b) ayant des caractéristiques équivalentes de celles du moteur électrique (2) et connecté au troisième dispositif (17) afin qu'il reçoive le signal de fréquence et qu'il crée un second signal indicatif de vitesse de référence représentatif d'une vitesse de rotation du moteur électrique (2) qui correspond au signal de fréquence d'entrée,
un sixième dispositif (11) recevant le premier signal de référence et destiné à dériver une différence entre la valeur du premier signal de référence et une valeur représentative de la vitesse voulue du moteur afin qu'il commande le premier dispositif (11) de manière qu'il réduise la différence entre la valeur du premier signal de référence et la valeur représentative de la vitesse voulue du moteur à zéro,
un septième dispositif (14) recevant le signal indicatif de vitesse du moteur, le signal indicatif de la première vitesse de référence et le signal indicatif de la seconde vitesse de référence et destiné à dériver une différence entre la valeur du signal indicatif de la vitesse du moteur et une valeur somme des valeurs du premier et du second signal indicatif de vitesse de référence afin qu'il produise un signal d'erreur de vitesse,

un huitième dispositif (12) commandé par le signal d'erreur de vitesse et destiné à dériver le signal de compensation en fonction de la valeur du signal d'erreur de vitesse et qu'il modifie le courant de couple afin qu'il assure la compensation de l'erreur de vitesse entre la valeur du signal indicatif de la vitesse du moteur et la valeur somme, et

un neuvième dispositif (16) recevant le signal d'erreur de vitesse et le signal de fréquence et destiné à dériver des données représentatives d'inertie qui sont représentatives d'un moment supposé d'inertie sur le moteur électrique (2), et à corriger une caractéristique de transfert de l'un au moins des éléments du circuit de manière que le facteur dépendant de l'inertie dans le quatrième dispositif coïncide avec celui du moteur électrique (2).

2. Ensemble de commande de vitesse de moteur selon la revendication 1, dans lequel le neuvième dispositif (16) modifie en outre les caractéristiques de transfert de l'un au moins des éléments du circuit afin que la fonction de transfert de la boucle globale de réglage de la vitesse du moteur soit maintenue à une valeur constante.

3. Ensemble de commande de vitesse de moteur selon la revendication 1, dans lequel le troisième dispositif (17) est réalisé afin qu'il produise le signal de fréquence qui a des caractéristiques de variation de la valeur du signal donnant une valeur moyenne nulle.

4. Ensemble de commande de vitesse de moteur selon la revendication 1, dans lequel le troisième dispositif (17) est réalisé de manière qu'il produise le signal de fréquence ayant des caractéristiques de variation de valeur du signal telles que la valeur intégrée devient nulle.

5. Ensemble de commande de vitesse de moteur selon la revendication 1, dans lequel le quatrième et le cinquième dispositif (13a, 13b) ont des premier et second éléments de transfert (131, 132, 133, 134) qui ont des caractéristiques variables de transfert, les premier et second éléments de transfert (131, 132, 133, 134) du quatrième et du cinquième dispositif (13a, 13b) étant ajustés à des caractéristiques de transfert telles que la valeur du signal d'erreur de vitesse est réduite à zéro en fonction de données représentatives de l'inertie du neuvième dispositif (16).

6. Ensemble de commande de vitesse de moteur selon la revendication 5, dans lequel le sixième dispositif (11) comporte un troisième élément de transfert (112) qui a des caractéristiques variables de transfert qui dépendent des données représentatives de l'inertie, les caractéristiques de transfert de l'élément de transfert (112) étant ajustées afin qu'elles maintiennent la fonction de transfert de la boucle globale de réglage de vitesse à une valeur constante.

7. Ensemble de commande de vitesse de moteur selon la revendication 1, qui comporte en outre un élément de transfert (112) ayant des caractéristiques variables de transfert qui dépendent des données représentatives de l'inertie et destiné à ajuster le courant modifié de couple qui doit être transmis au moteur électrique afin que la différence de facteurs d'inertie du moteur électrique et du quatrième dispositif soit compensée.

8. Ensemble de commande de vitesse de moteur, comprenant :

a) un premier dispositif (11, 40) destiné à créer un courant de couple destiné à piloter un moteur électrique (2, 41) à une vitesse de rotation correspondant à l'intensité du courant de couple,

b) un second dispositif (2, 41) destiné à produire un signal indicatif de vitesse du moteur représentant une vitesse de rotation du moteur électrique (2, 41),

c) un quatrième dispositif (13a, 45) ayant des caractéristiques équivalentes à celles du moteur électrique et connecté au premier dispositif afin qu'il crée un premier signal indicatif d'une vitesse de référence représentant une vitesse de rotation du moteur électrique (2, 41) qui correspond au courant de couple d'entrée,

d) un sixième dispositif (11, 40) recevant le premier signal de référence et destiné à dériver une différence entre la valeur du premier signal de référence et une valeur représentative de la vitesse voulue du moteur pour la commande du premier dispositif (11, 40) afin qu'il réduise la différence entre la valeur du premier signal de référence et la valeur représentative de la vitesse voulue du moteur à une valeur nulle,

e) un dixième dispositif (42, 44) placé entre le premier dispositif (11, 40) et au moins le moteur électrique (2, 41) ou le quatrième dispositif, afin qu'il limite le courant de couple destiné à être transmis au moins au moteur électrique ou au quatrième dispositif à une plage prédéterminée, le dixième dispositif (42, 44) comprenant un premier limiteur (42) placé entre le premier dispositif (11, 40) et le quatrième dispositif (13a, 45) afin qu'il limite le courant de couple destiné à être transmis au quatrième dispositif (13a, 45) dans une première plage déterminée, et un second limiteur (44) disposé entre le premier dispositif (11, 40) et le moteur électrique (2, 41) et destiné à limiter le courant de couple destiné à être transmis au moteur électrique (2, 41) à une seconde plage déterminée,

g) un septième dispositif (14, 47) commandé par le signal indicatif de vitesse du moteur et le signal indicatif de la première vitesse de référence et destiné à dériver une différence entre la valeur du signal indicatif d'une vitesse du moteur et la valeur du signal indicatif d'une première vitesse de référence afin qu'il produise un signal d'erreur de vitesse, et

h) un huitième dispositif (12, 46) commandé par le signal d'erreur de vitesse et destiné à dériver un signal de compensation qui dépend de la valeur du signal d'erreur de vitesse afin qu'il modifie le courant de couple et compense ainsi l'erreur de vitesse entre la valeur du signal indicatif de la vitesse du moteur et la valeur du signal indicatif de la première vitesse de référence.

**9.** Ensemble de commande de vitesse de moteur selon la revendication 8, dans lequel le second limiteur (44) est disposé entre le premier limiteur (42) et le moteur électrique (2, 41).

**10.** Ensemble de commande de vitesse de moteur selon la revendication 8 ou 9, qui comporte en outre :

un troisième dispositif (30) destiné à créer une fréquence connue d'un signal de fréquence qui est destiné à être ajouté au courant fondamental de couple pour le pilotage du moteur électrique (2, 41) avec un courant modifié de couple,

un cinquième dispositif (13b) ayant des caractéristiques équivalentes de celles du moteur électrique et connecté au troisième dispositif (30) afin qu'il reçoive le signal de fréquence et qu'il crée un second signal indicatif d'une vitesse de référence qui est représentatif d'une vitesse de rotation du moteur électrique (2, 41) correspondant au signal de fréquence d'entrée,

le septième dispositif (14, 47) recevant le signal indicatif de la vitesse du moteur, le signal indicatif de la première vitesse de référence et le signal indicatif de la seconde vitesse de référence afin qu'il dérive une différence entre la valeur du signal indicatif de vitesse du moteur et une valeur somme des valeurs des signaux indicatifs de la première et de la seconde vitesse de référence pour la création d'un signal d'erreur de vitesse, et

un neuvième dispositif (31) recevant le signal d'erreur de vitesse et le signal de fréquence et destiné à dériver des données représentatives d'inertie qui sont représentatives d'un moment d'inertie supposé du moteur électrique, et qui corrige les caractéristiques de transfert d'au moins un élément du circuit de manière que le facteur dépendant de l'inertie dans le sixième dispositif coïncide avec celui du moteur électrique (2, 41).

FIG.1

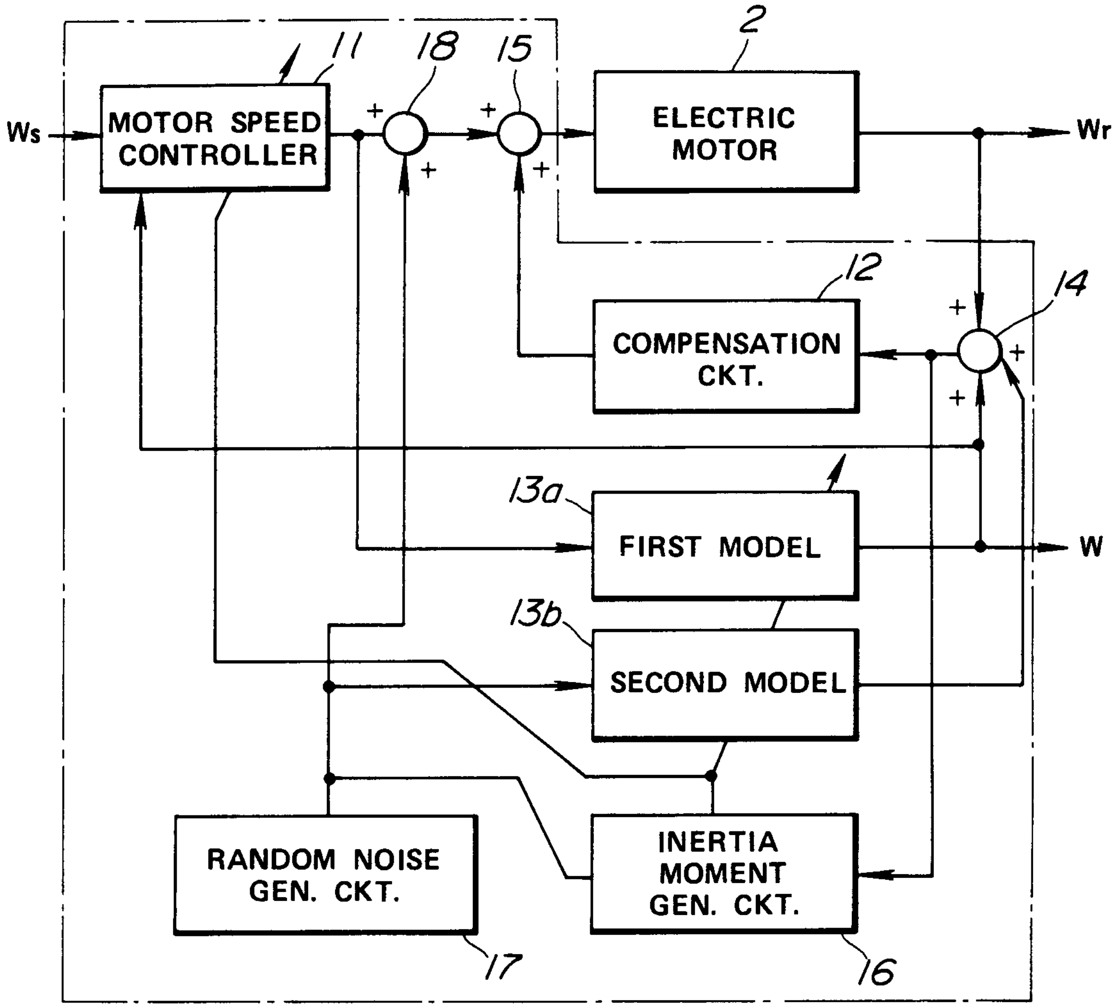
Ws
MOTOR SPEED CONTROLLER
11
18
15
2
ELECTRIC MOTOR
Wr
12
COMPENSATION CKT.
14
13a
FIRST MODEL
W
13b
SECOND MODEL
RANDOM NOISE GEN. CKT.
INERTIA MOMENT GEN. CKT.
17
16

FIG.2

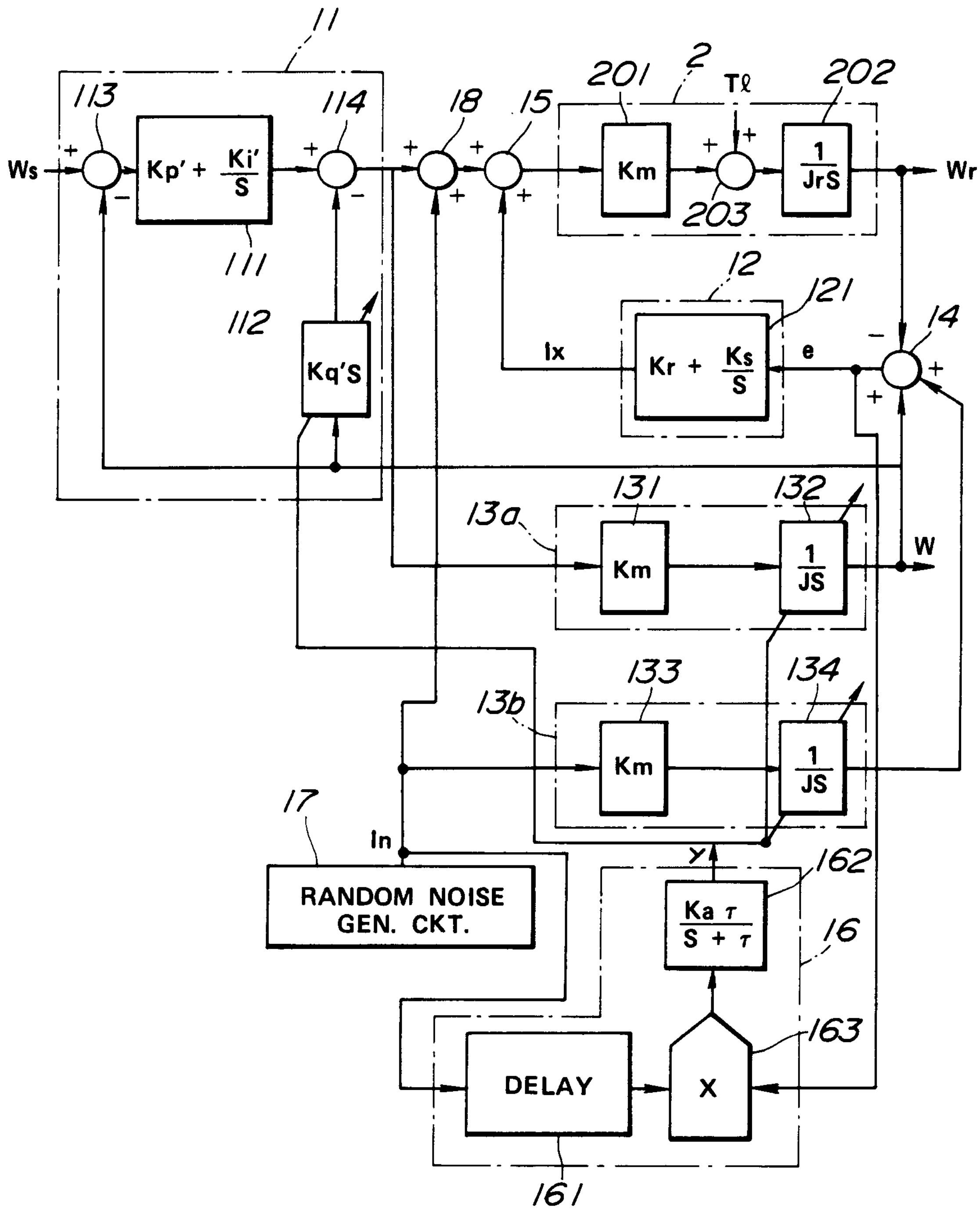
11
113
Ws
Kp' + Ki'/S
114
111
112
Kq'S
18
15
2
201
Tℓ
202
Km
1/JrS
203
Wr
12
121
Ix
Kr + Ks/S
e
14
13a
131
132
Km
1/JS
W
133
134
13b
Km
1/JS
17
In
RANDOM NOISE GEN. CKT.
Y
162
Ka τ/S + τ
16
163
DELAY
X
161

FIG. 3

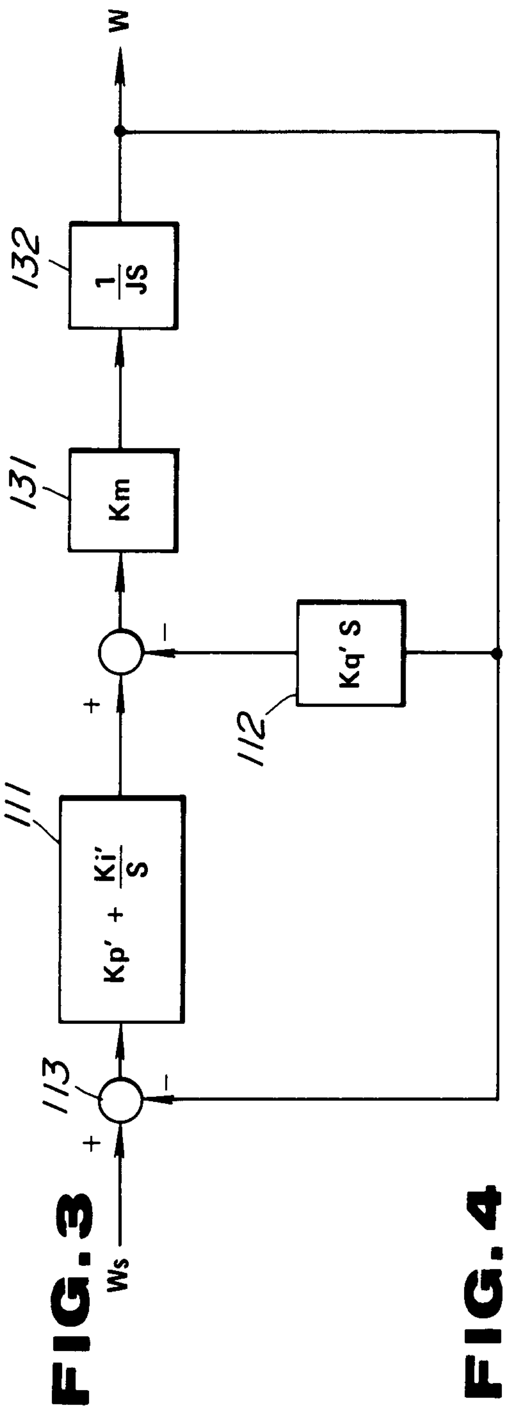
Ws
113
111
Kp' + Ki'/S
112
Kq' S
131
Km
132
1/JS
W

FIG. 4

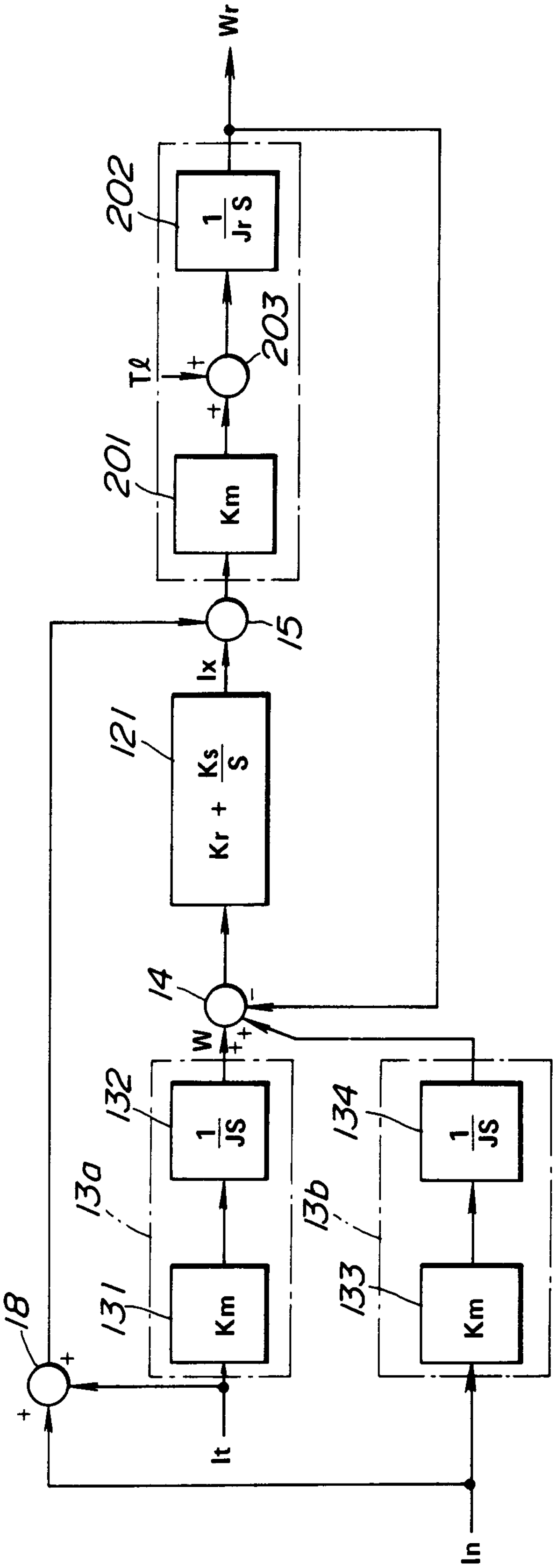
In
It
18
131
Km
132
1/JS
13a
133
Km
134
1/JS
13b
W
14
121
Kr + Ks/S
Ix
15
201
Km
203
Tℓ
202
1/Jr S
Wr

FIG. 5

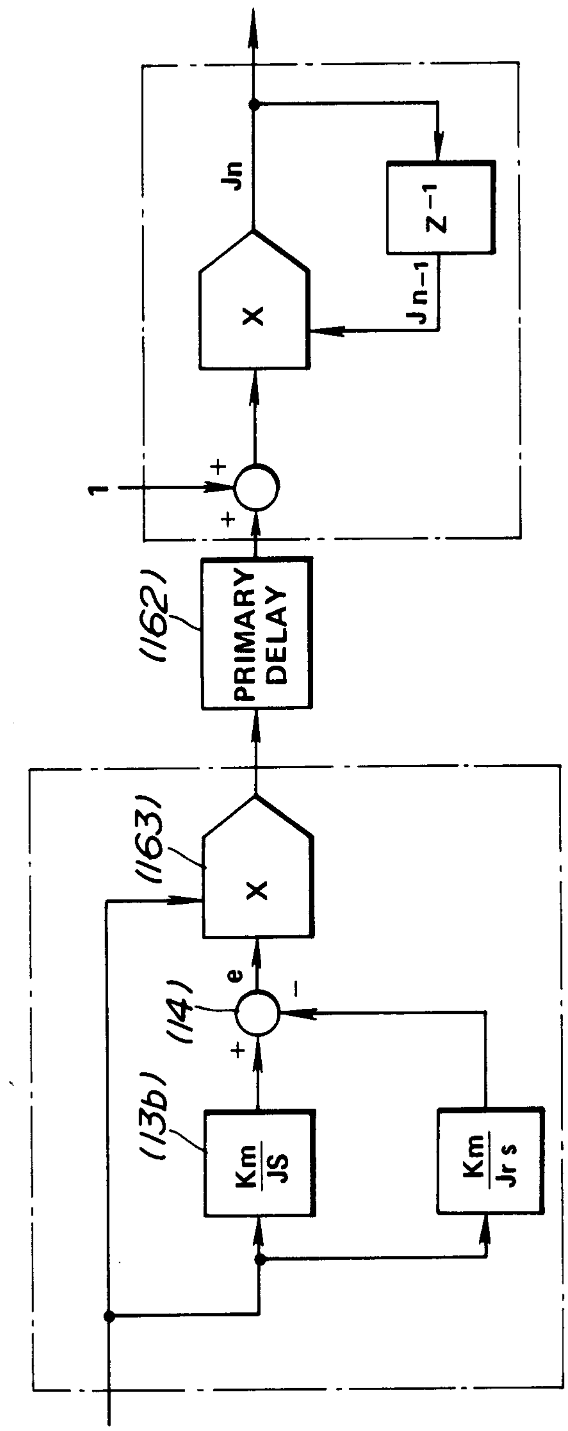

FIG.6

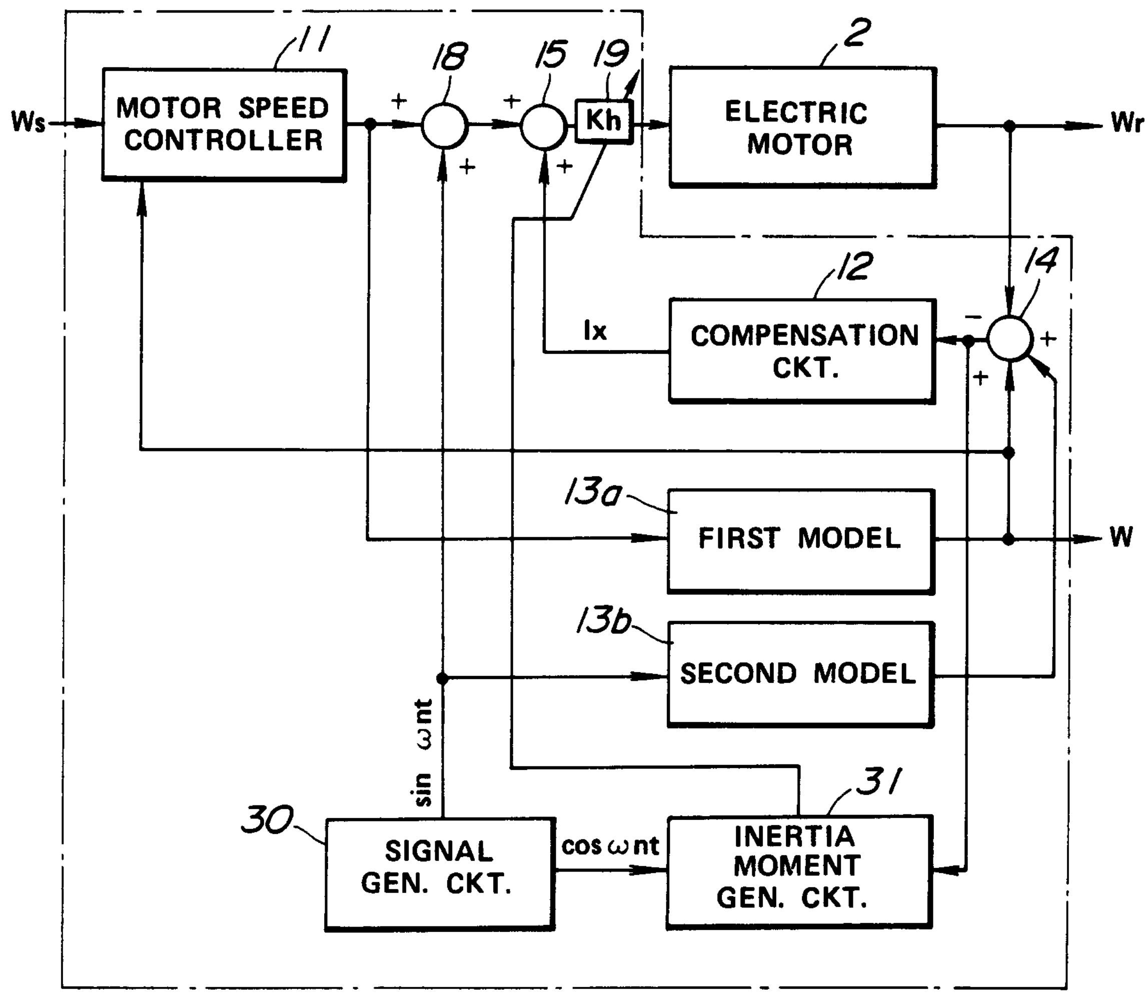

11
18
15
19
2
Ws
MOTOR SPEED CONTROLLER
+
+
+
+
Kh
ELECTRIC MOTOR
Wr
12
14
Ix
COMPENSATION CKT.
−
+
+
13a
FIRST MODEL
W
13b
SECOND MODEL
sin ωnt
31
30
SIGNAL GEN. CKT.
cos ωnt
INERTIA MOMENT GEN. CKT.

FIG.7

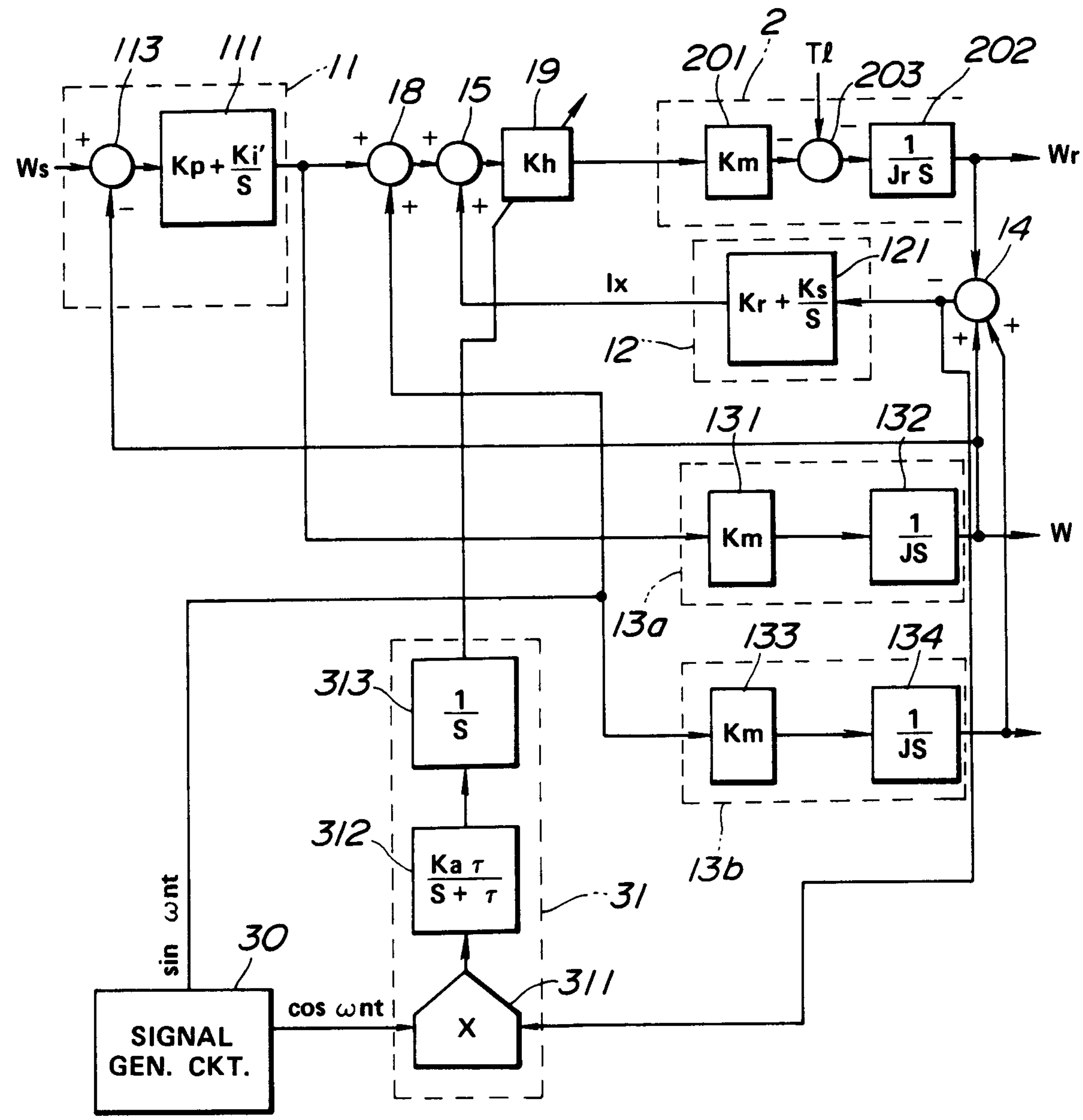
113
111
11
Ws
+
-
Kp + Ki'/S
18
15
19
+
Kh
2
201
Tℓ
203
202
Km
1/Jr S
Wr
14
121
Ix
Kr + Ks/S
12
131
132
Km
1/JS
W
13a
133
134
Km
1/JS
13b
313
1/S
312
Ka τ/S + τ
31
sin ωnt
30
cos ωnt
311
X
SIGNAL GEN. CKT.

FIG. 8

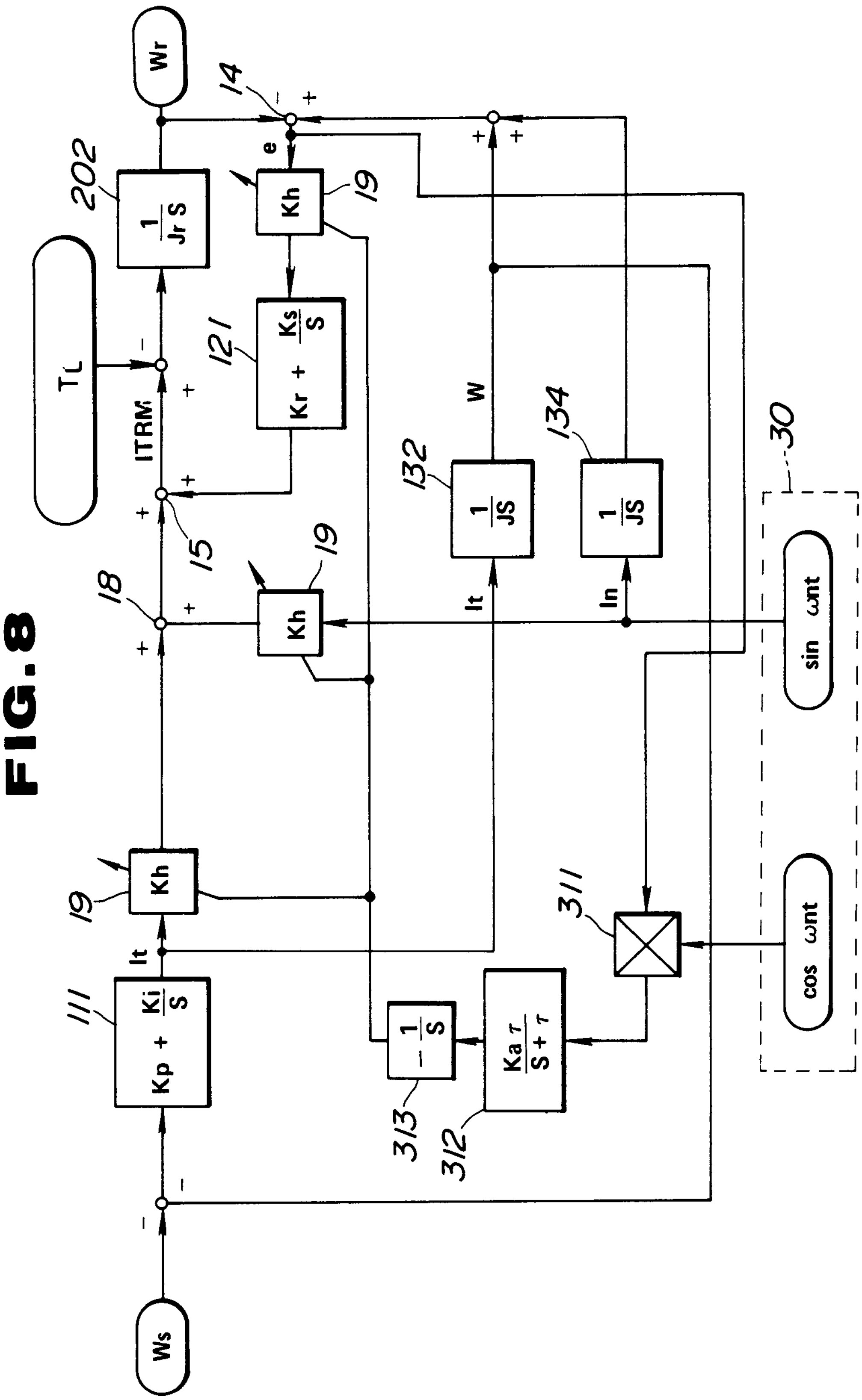
Ws
Wr
TL
ITRM
It
In
W
e
Kp + Ki/S
Kh
Kr + Ks/S
1/Jr S
1/JS
Kaτ/(S+τ)
-1/S
sin ωnt
cos ωnt
111
19
18
15
121
202
14
132
134
30
311
312
313

FIG. 9

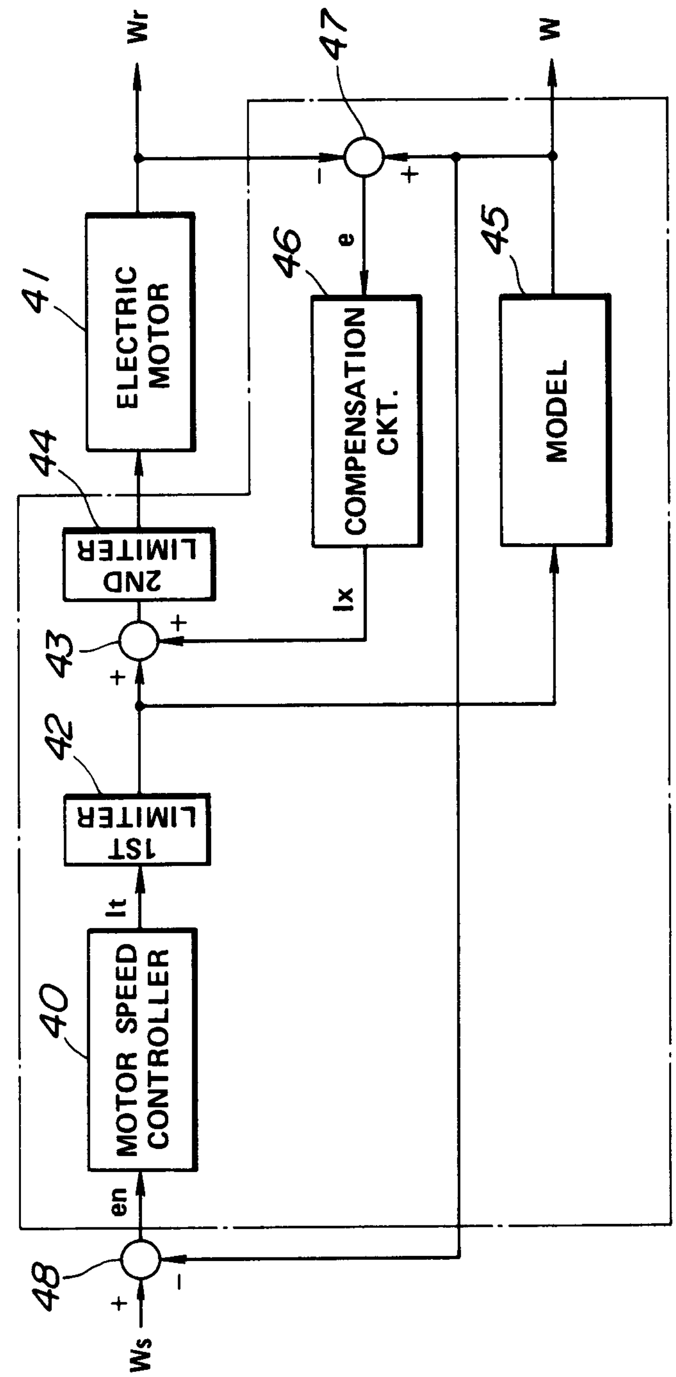
MOTOR SPEED CONTROLLER
1ST LIMITER
2ND LIMITER
ELECTRIC MOTOR
COMPENSATION CKT.
MODEL
Ws
en
It
Ix
e
Wr
W
40
41
42
43
44
45
46
47
48

FIG.10

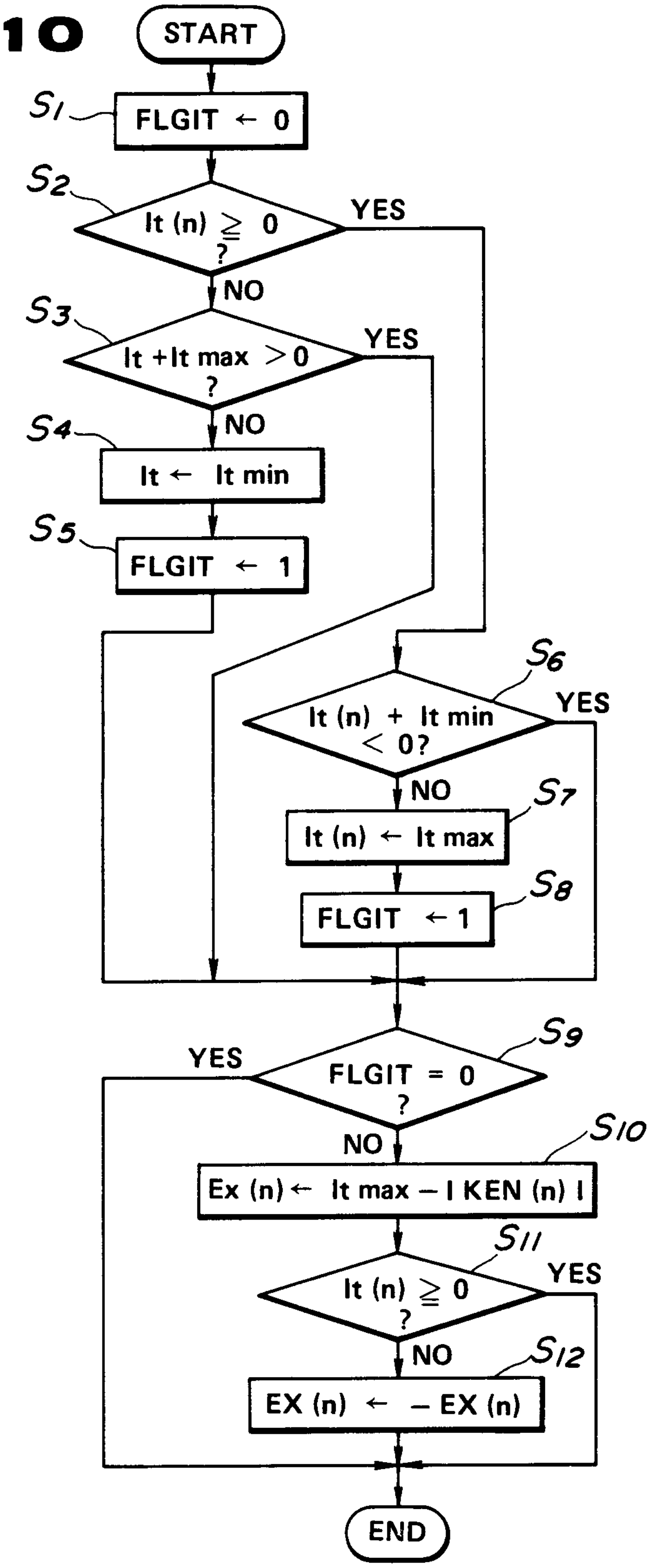
START
S1
FLGIT ← 0
S2
It (n) ≧ 0 ?
YES
NO
S3
It + It max > 0 ?
YES
NO
S4
It ← It min
S5
FLGIT ← 1
S6
It (n) + It min < 0?
YES
NO
S7
It (n) ← It max
S8
FLGIT ← 1
S9
FLGIT = 0 ?
YES
NO
S10
Ex (n) ← It max − I KEN (n) I
S11
It (n) ≧ 0 ?
YES
NO
S12
EX (n) ← − EX (n)
END

FIG.11

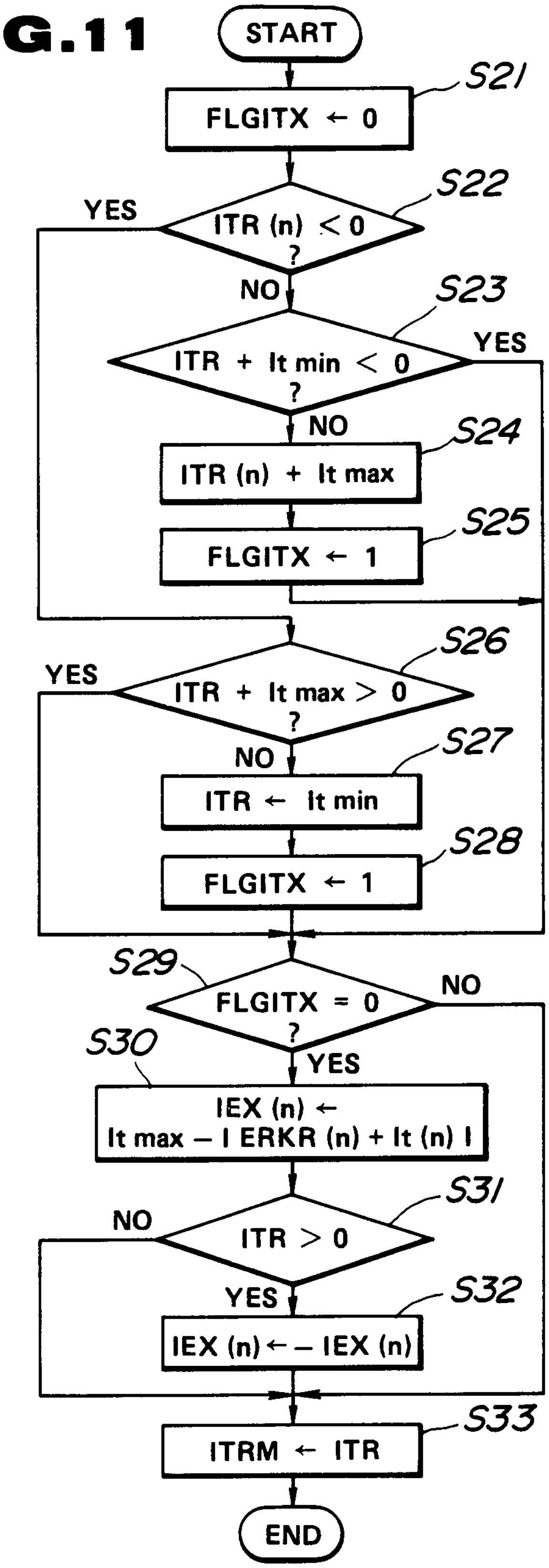
START
FLGITX ← 0
S21
ITR (n) < 0 ?
S22
YES
NO
ITR + It min < 0 ?
S23
YES
NO
ITR (n) + It max
S24
FLGITX ← 1
S25
ITR + It max > 0 ?
S26
YES
NO
ITR ← It min
S27
FLGITX ← 1
S28
FLGITX = 0 ?
S29
NO
YES
IEX (n) ←
It max − I ERKR (n) + It (n) I
S30
ITR > 0
S31
NO
YES
IEX (n) ← − IEX (n)
S32
ITRM ← ITR
S33
END

FIG.12